(19) Europäisches Patentamt
European Patent Office
Office européen des brevets

(11) Veröffentlichungsnummer: **0 530 660 A2**

# (12) EUROPÄISCHE PATENTANMELDUNG

(21) Anmeldenummer: **92114526.4**

(22) Anmeldetag: **26.08.92**

(51) Int. Cl.[5]: **C09B 62/517**, C09B 62/10, //C09B62/537

(30) Priorität: **28.08.91 DE 4128511**

(43) Veröffentlichungstag der Anmeldung:
**10.03.93 Patentblatt 93/10**

(84) Benannte Vertragsstaaten:
**BE CH DE ES FR GB IT LI PT**

(71) Anmelder: **HOECHST AKTIENGESELLSCHAFT**
**Postfach 80 03 20**
**W-6230 Frankfurt am Main 80(DE)**

(72) Erfinder: **Beck, Thomas, Dr.**
**Altkönigstrasse 1**
**W-6232 Bad Soden/Taunus 3(DE)**
Erfinder: **Russ, Werner Hubert, Dr.**
**Wingertstrasse 8a**
**W-6093 Flörsheim/Main(DE)**
Erfinder: **Springer, Hartmut, Dr.**
**Am Erdbeerstein 27**
**W-6240 Königstein/Taunus(DE)**
Erfinder: **Bänfer, Marcus**
**Joseph-Haydn-Strasse 15**
**W-6232 Bad Soden/Taunus(DE)**

## (54) Wasserlösliche Phthalocyaninfarbstoffe, Verfahren zu ihrer Herstellung und ihre Verwendung.

(57) Phthalocyaninfarbstoffe, insbesondere Kupfer- und Nickelphthalocyaninfarbstoffe, die eine oder mehrere Gruppen der nachstehend angegebenen und definierten Formel

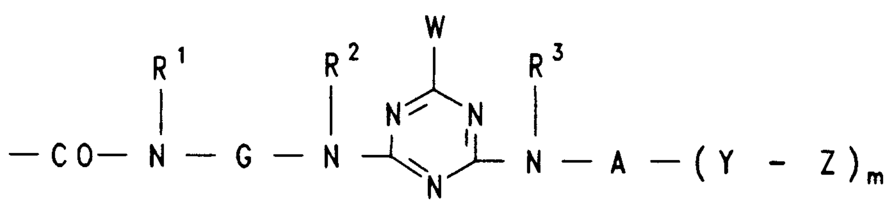

oder eine oder mehrere Carboxygruppen oder beide Gruppen enthalten und die weiterhin eine oder mehrere Sulfogruppen, übliche Sulfonamidgruppen und/oder Gruppen der nachstehend angegebenen und definierten allgemeinen Formel

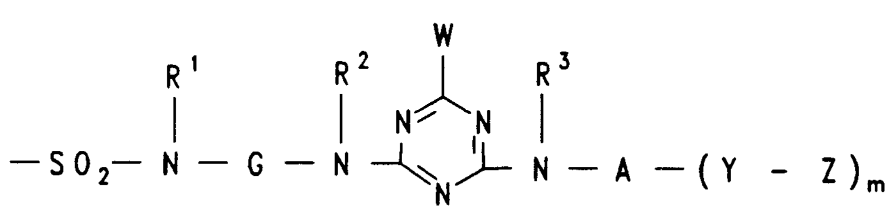

besitzen können, färben hydroxy- und/oder carbonamidgruppenhaltige Materialien, insbesondere Fasermaterialien, wie beispielsweise Cellulosefasermaterialien, Wolle und Polyamidfasern, in farbstarken, echten, vorwiegend grünen Tönen.
In den Formeln bedeuten:

EP 0 530 660 A2

$R^1$ und $R^2$ sind beide, unabhängig voneinander, Wasserstoff oder ein niederer gegebenenfalls substituierter aliphatischer Rest, G ist niederes Alkylen oder ist Phenylen, das durch niederes Alkyl, niederes Alkoxy, Halogen, Sulfo, Carboxy und/oder Nitro substituiert sein kann, oder die Gruppierung $-N(R^1)-G-N(R^2)-$ bildet den bivalenten Rest eines gesättigten Heterocyclus, W ist Halogen, niederes Alkoxy, Aryloxy, Sulfo, Phenylsulfonyl, niederes Alkylsulfonyl oder eine gegebenenfalls substituierte Aminogruppe oder ist ein Rest der Formel $-N(R^3)-A-(Y-Z)_m$ mit $R^3$, A, Y, Z und m der nachstehend angegebenen Bedeutung, A ist ein aromatischer carbocyclischer oder aromatischer heterocyclischer Rest oder ein Alkylenrest, der durch 1 oder 2 Heterogruppen unterbrochen sein kann, oder ist ein Alkylenphenylenrest oder der bivalente Rest eines gesättigten, zwei N-Atome enthaltenden Heterocyclus, Y ist im Falle, daß A einen aromatischen Rest darstellt, eine direkte Bindung oder eine Carbamoyl-alkylen-Gruppe oder eine Methylen-, Ethylen-, Methylamino- oder $\beta$-Cyanoethyl-amino-Gruppe, oder Y ist niederes Alkylen, wobei in diesem Falle A zwingend eine direkte Bindung und m gleich 2 ist, Z ist eine faserreaktive Gruppe der Vinylsulfonreihe, m ist die Zahl 1 oder 2 und $R^3$ ist Wasserstoff oder niederes Alkyl.

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, nicht nur in Bezug auf Echtheiten der mit ihnen erhältlichen Färbungen, sondern auch auf einen erhöhten Fixiergrad der Farbstoffe auf dem zu färbenden Material. Faserreaktive Phthalocyaninfarbstoffe sind beispielsweise aus der Europäischen Patentanmeldungs-Veröffentlichung Nr. 0 073 267A und den US-Patentschriften Nrs. 4 505 714, 4 693 725 und 4 812 558 bekannt; sie enthalten, über einen N-Aryl oder N-Alkyl-sulfonamid-Rest gebunden, eine faserreaktive Gruppe aus der Halogentriazinreihe und zusätzlich einen faserreaktiven Rest aus der Vinylsulfonreihe. Trotz der sehr guten färberischen Eigenschaften dieser bekannten Farbstoffe war es wünschenswert, Farbstoffe zu entwickeln, die einen erhöhten Fixiergrad besitzen und Färbungen mit besserer coloristischer Farbstärke liefern.

Mit der vorliegenden Erfindung wurden nunmehr neue, wasserlösliche, verbesserte Phthalocyaninfarbstoffe gefunden, mit denen qualitativ hochwertige Färbungen in einem brillanten Grün erhalten werden und die der allgemeinen Formel (1) entsprechen (die Formel (1) wie auch die nachstehend erwähnten Formeln sind in Formelblättern nach den Beispielen aufgezeichnet).

In Formel (1) bedeuten:

| | |
|---|---|
| Pc | ist der Rest des metallfreien oder eines metallhaltigen Phthalocyanins, wie beispielsweise des Kupfer-, Kobalt- oder Nickelphthalocyanins, wobei der Phthalocyaninrest noch in den 3- und/oder 4-Stellungen der carbocyclischen aromatischen Ringe des Phthalocyanins substituiert sein kann, wie beispielsweise durch Halogenatome, wie Chloratome, oder Arylreste, wie Phenylreste, und in welchem die Carboxy-, Carbonamid-, Sulfonamid- und/oder Sulfogruppen in den 3- und/oder 4-Stellungen der carbocyclischen aromatischen Ringe des Phthalocyanins gebunden sind; |
| $R^1$ | ist Wasserstoff oder ein niederer aliphatischer Rest, insbesondere niederes Alkyl, der substituiert sein kann, bevorzugt Wasserstoff; |
| $R^2$ | ist Wasserstoff oder ein niederer aliphatischer Rest, insbesondere niederes Alkyl, der substituiert sein kann, bevorzugt Wasserstoff; |
| $R^3$ | ist Wasserstoff oder Alkyl von 1 bis 4 C-Atome, wie Methyl und Ethyl, bevorzugt Wasserstoff; |
| $R^4$ | ist Wasserstoff oder niederes Alkyl, das substituiert sein kann, oder Cycloalkyl von 5 bis 8 C-Atomen, wie Cyclohexyl; |
| $R^5$ | ist Wasserstoff oder niederes Alkyl, das substituiert sein kann, oder Aryl, das substituiert sein kann, oder ist Cyano; oder |
| $R^4$ und $R^5$ | bilden gemeinsam mit dem Stickstoffatom und einem Alkylenrest von 3 bis 8 C-Atomen, bevorzugt 4 bis 6 C-Atomen, oder mit einem weiteren Heteroatom, wie einem Stickstoffatom oder einem Sauerstoffatom, und zwei niederen Alkylenresten den Rest eines 4- bis 8-gliedrigen heterocyclischen Rings, wie beispielsweise den N-Piperidino-, N-Piperazino- oder N-Morpholino-Rest, oder |
| $-NR^4R^5$ | stellt einen Rest der Formel (2) dar, in welcher $R^3$, A, Y, Z und m eine der obengenannten Bedeutungen haben; |
| G | ist Alkylen von 1 bis 6 C-Atomen, insbesondere von 2 bis 4 C-Atomen, wie Ethylen oder Propylen, oder ist Phenylen, vorzugsweise para-Phenylen und insbesondere meta-Phenylen, das durch 1 bis 4 Substituenten, vorzugsweise 1 oder 2 Substituenten, aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Sulfo, Carboxy und Nitro, bevorzugt Methyl, Ethyl, Methoxy, Ethoxy, Sulfo und Carboxy, substituiert sein kann, oder die Gruppierung $-N(R^1)-G-N(R^2)-$ bildet zusammen den bivalenten Rest eines gesättigten Heterocyclus, wie den 1,4-Piperazidinylen-Rest; |
| W | ist Halogen, wie Chlor und Fluor, Alkoxy von 1 bis 4 C-Atomen, wie Methoxy und Ethoxy, Aryloxy, Sulfo, Phenylsulfonyl, Alkylsulfonyl von 1 bis 4 C-Atomen, wie Methylsulfonyl und Ethylsulfonyl, oder eine Aminogruppe der allgemeinen Formel $-NR^6R^7$, in welcher $R^6$ eine der oben für $R^4$ genannten Bedeutungen und $R^7$ eine der oben für $R^5$ genannten Bedeutungen besitzt, oder W ist ein Rest der obengenannten allgemeinen Formel (2), in welcher $R^3$, A, Y, Z und m eine der obengenannten Bedeutungen besitzen; |
| A | ist ein aromatischer carbocyclischer oder aromatischer heterocyclischer Rest, bevorzugt ein gegebenenfalls subtituierter Phenylen- oder Naphthylenrest, insbesondere ein Phenylen- oder Naphthylenrest, die beide durch 1 bis 3 Substituenten aus der Gruppe |

niederes Alkyl, wie Methyl und Ethyl, niederes Alkoxy, wie Methoxy und Ethoxy, Halogen, wie Chlor und Brom, Carboxy, Nitro und Sulfo substituiert sein können, oder ist ein Alkylenrest von 1 bis 8 C-Atomen, bevorzugt 2 bis 6 C-Atomen, oder ein Alkylenrest von 2 bis 8 C-Atomen, der durch 1 oder 2 Heterogruppen, wie -O- oder -NH-, unterbrochen ist, oder ist ein Rest der Formel -alk-phenylen-, in welchem alk ein Alkylen von 1 bis 4 C-Atomen, wie Methylen oder Ethylen, und phenylen ein Phenylenrest, wie meta-Phenylen und insbesondere para-Phenylen, ist, oder

A ist ein Rest der allgemeinen Formel (3), in welcher
n eine ganze Zahl von 2 bis 4 ist und
alkylen einen Alkylenrest von 1 bis 6 C-Atomen, bevorzugt von 1 bis 4 C-Atomen, darstellt;

Y ist im Falle, daß A einen aromatischen Rest darstellt, eine direkte Bindung oder eine Gruppe der Formel -CO-NH-alkylen- mit alkylen der obigen Bedeutung,
oder ist eine Gruppe der Formel

$-CH_2-$, $-CH_2-CH_2-$,

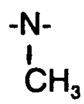 oder 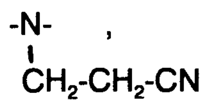 ,

oder

Y ist Alkylen von 2 bis 6 C-Atomen, bevorzugt von 2 bis 4 C-Atomen, wie 1,2-Ethylen oder 1,3-Propylen, wobei in diesem Falle -A- zwingend eine direkte Bindung und m gleich 2 ist;

Z ist Vinylsulfonyl oder ist Ethylsulfonyl, das in $\beta$-Stellung einen alkalisch eliminierbaren Substituenten enthält, wie beispielsweise $\beta$-Chlorethylsulfonyl, $\beta$-Acetoxyethylsulfonyl, $\beta$-Thiosulfatoethylsulfonyl oder $\beta$-Phosphatoethylsulfonyl,bevorzugt $\beta$-Sulfatoethylsulfonyl;

a ist eine ganze Zahl von Null bis 4, bevorzugt Null, 1 oder 2, insbesondere 1 oder 2;

b ist eine ganze Zahl von Null bis 3;

c ist eine ganze Zahl von Null bis 3;

d ist eine ganze Zahl von Null bis 3;

e ist eine ganze Zahl von Null bis 2;

die Summe von (a + b + c + d + e) ist höchstens 4;
die Summe von (a + b) ist 1 bis 4, bevorzugt 1, 2 oder 3;
die Summe von (a + d) ist 1 bis 4;
die Summe von (c + d) ist Null bis 4;

m ist die Zahl 1 oder 2, bevorzugt 1;

M ist ein Wasserstoffatom oder ein Alkalimetall, wie Natrium, Kalium oder Lithium, oder ein anderes salzbildendes Metall.

Die Formelglieder können zueinander gleiche oder voneinander verschiedene Bedeutungen besitzen.

Die erfindungsgemäßen Phthalocyaninfarbstoffe werden in der Regel in Form von Gemischen der Einzelverbindungen der allgemeinen Formel (1) erhalten, wobei sich diese Einzelverbindungen voneinander durch den Substitutionsgrad der Carboxy-, Sulfo-, Carbonamid- und Sulfonamidgruppen an den Phthalocyaninrest unterscheiden, d.h. durch die Größe der Indices a, b, c, d und e. Die Formeln der erfindungsgemäßen Phthalocyaninfarbstoffe haben deshalb Indices, die in der Regel gebrochene Zahlen sind.

Eine Sulfogruppe ist eine Gruppe der allgemeinen Formel $-SO_3M$ mit M der obengenannten Bedeutung; in gleicher Weise ist eine Carboxygruppe eine Gruppe der allgemeinen Formel -COOM, eine Sulfatogruppe eine Gruppe der allgemeinen Formel $-OSO_3M$, eine Thiosulfatogruppe eine Gruppe der allgemeinen Formel $-S-SO_3M$ und eine Phosphatogruppe eine Gruppe der allgemeinen Formel $-OPO_3M_2$, jeweils mit M der obengenannten Bedeutung.

Die erfindungsgemäßen Phthalocyaninfarbstoffe der Formel (1) liegen in Form ihrer Salze, wie der Alkalimetallsalze, vor und finden als solche ihre Verwendung zum Färben von Fasermaterialien.

Die im vorhergehenden und im nachfolgenden benutzte Angabe "niedere" bedeutet, daß die damit bezeichneten Gruppen Alkylreste oder Alkylenreste von 1 bis 6 C-Atomen, bevorzugt von 1 bis 4 C-Atomen, enthalten bzw. sind. Die aliphatischen Reste und die Arylreste der Formelglieder R, $R^1$, $R^2$, $R^4$ und $R^5$ können, wie angegeben, Substituenten enthalten. Bei den Alkylresten, bevorzugt niedere Alkylgruppen, sind

die Substituenten bevorzugt Hydroxy, niederes Alkoxy, Chlor, Sulfato, Cyano, Sulfo, Carboxy, Phenyl, Sulfophenyl und Carboxyphenyl, wobei diese Alkylreste, falls substituiert, bevorzugt 1 oder 2 solche Substituenten enthalten. Arylreste sind bevorzugt gegebenenfalls substituierte Naphthylreste, wie sulfosubstituierte Naphthylreste, und insbesondere substituierte Phenylreste, vorzugsweise solche mit 1 oder 2 Substituenten aus der Gruppe Methyl, Ethyl, Methoxy, Ethoxy, Chlor, Carboxy und Sulfo. Alkylreste sind bevorzugt die Methyl- oder Ethylgruppe, und Alkoxyreste sind bevorzugt die Ethoxy- und insbesondere die Methoxygruppe.

Bevorzugte Verbindungen der allgemeinen Formel (1) sind solche, in welchen e für die Zahl Null steht oder im Falle, daß e größer als Null ist, $R^4$ und $R^5$ beide ein Wasserstoffatom bedeuten. Weiterhin bevorzugt sind solche Verbindungen, in denen Pc den Kuperphthalocyaninrest bedeutet, und des weiteren solche Verbindungen entsprechend der allgemeinen Formel (1), in welchen b, c und e jeweils die Bedeutung von Null besitzen.

Bevorzugt sind weiterhin Verbindungen der allgemeinen Formel (1), in welchen $R^1$, $R^2$ und $R^3$ oder mindestens eines davon Wasserstoff bedeuten, und des weiteren solche, in welchen A der meta- oder para-Phenylenrest ist, der durch Sulfo, Methyl und/oder Methoxy substituiert sein kann, oder Ethylen oder n-Propylen ist.

Reste der allgemeinen Formel (2), die in den Verbindungen der allgemeinen Formel (1) enthalten sind bzw. sein können, sind beispielsweise

2-(β-Sulfatoethylsulfonyl)-phenyl-amino, 3-(β-Sulfatoethylsulfonyl)-phenyl-amino, 4-(β-Sulfatoethylsulfonyl)-phenyl-amino, 2-Carboxy-5-(β-sulfatoethylsulfonyl)-phenyl-amino, 2-Chlor-3-(β-sulfatoethylsulfonyl)-phenyl-amino, 2-Chlor-4-(β-sulfatoethylsulfonyl)-phenyl-amino, 2-Ethoxy-4- oder -5-(β-sulfatoethylsulfonyl)-phenyl-amino, 2-Ethyl-4-(β-sulfatoethylsulfonyl)-phenyl-amino, 2-Methoxy-5-(β-sulfatoethylsulfonyl)-phenyl-amino, 2,4-Diethoxy-5-(β-sulfatoethylsulfonyl)-phenyl-amino, 2,4-Dimethoxy-5-(β-sulfatoethylsulfonyl)-phenyl-amino, 2,5-Dimethoxy-4-(β-sulfatoethylsulfonyl)-phenyl-amino, 2-Methoxy-5-methyl-4-(β-sulfatoethylsulfonyl)-phenyl-amino, 2- oder 3- oder 4-(β-Thiosulfatoethylsulfonyl)-phenyl-amino,
2-Methoxy-5-(β-thiosulfatoethylsulfonyl)-phenyl-amino, 2-Sulfo-4-(β-phosphatoethylsulfonyl)-phenyl-amino,
2-Sulfo-4-vinylsulfonyl-phenyl-amino,
2-Hydroxy-4- oder -5-(β-sulfatoethylsulfonyl)-phenyl-amino, 2-Chlor-4- oder -5-(β-chlorethylsulfonyl)-phenyl-amino, 2-Hydroxy-3-sulfo-5-(β-sulfatoethylsulfonyl)-phenyl-amino, 3- oder 4-(β-Acetoxyethylsulfonyl)-phenyl-amino, 2-Methoxy-4-[β-(N-methyl-tauryl)-ethylsulfonyl]-phenyl-amino, 5-(β-Sulfatoethylsulfonyl)-naphth-2-yl-amino, 6- oder 7- oder 8-(β-Sulfatoethylsulfonyl)-naphth-2-yl-amino,
6-(β-Sulfatoethylsulfonyl)-1-sulfo-naphth-2-yl-amino,
5-(β-Sulfatoethylsulfonyl)-1-sulfo-naphth-2-yl-amino,
8-(β-Sulfatoethylsulfonyl)-6-sulfo-naphth-2-yl-amino,
β-[4-(β'-Sulfatoethylsulfonyl)-phen]-ethylamino,
β-[2-Sulfo-4-(β'-sulfatoethylsulfonyl)-phen]-ethylamino,
β-(β'-Chlorethylsulfonyl)-ethylamino, β-(β'-Sulfatoethylsulfonyl)-ethylamino,
β-(Vinylsulfonyl)-ethylamino, γ-(β'-Chlorethylsulfonyl)-propylamino,
γ-(β'-Sulfatoethylsulfonyl)-propylamino, γ-(β'-Bromethylsulfonyl)-propylamino,
γ-(Vinylsulfonyl)-propylamino, 1-Methyl-1-(β-sulfatoethylsulfonyl)-1-ethylamino,
δ-(β'-Sulfatoethylsulfonyl)-butylamino, 2-Methyl-2-(β-chlorethylsulfonyl)-1-propylamino, ω-(β'-Chlorethylsulfonyl)-pentylamino, β-(β'-Chlorethylsulfonyl)-n-hexylamino, N-Methyl-N-[β-(β'-chlorethylsulfonyl)-ethyl]-amino,
N-Ethyl-N-[β-(β'-chlorethylsulfonyl)-ethyl]-amino,
N-n-Propyl-N-[β-(β'-chlorethylsulfonyl)-ethyl]-amino,
N-n-Butyl-N-[β-(β'-chlorethylsulfonyl)-ethyl]-amino
N-n-Pentyl-N-[β-(β'-chlorethylsulfonyl)-ethyl]-amino,
N-n-Hexyl-N-[β-(β'-chlorethylsulfonyl)-ethyl]-amino,
N-Carboxymethyl-N-[β-(β'-bromethylsulfonyl)-ethyl]-amino,
N-Sulfatomethyl-N-[β-(β'-chlorethylsulfonyl)-ethyl]-amino,
N-(β-Carboxyethyl)-N-[γ'-chlorethylsulfonyl)-propyl]-amino,
N-(β-Sulfatoethyl)-N-[γ'-(β''-chlorethylsulfonyl)-propyl]-amino,
N-(β-Sulfatoethyl)-N-[δ'-(β''-chlorethylsulfonyl)-butyl]-amino,
N-(β-Ethoxyethyl)-N-[δ'-(β''-chlorethylsulfonyl)-butyl]-amino,
N-(γ-Chlorpropyl)-N-[β'-(β''-chlorethylsulfonyl)-ethyl]-amino,
N-Phenyl-N-[β-(β'-chlorethylsulfonyl)-ethyl]-amino,
N-(4-Chlorphenyl)-N-[β-(β'-chlorethylsulfonyl)-ethyl]-amino,
N-(2-Methylphenyl)-N-[β-(β'-chlorethylsulfonyl)-ethyl]-amino,
N-(4-Methoxyphenyl)-N-[β-(β'-chlorethylsulfonyl)-ethyl]-amino,

N-(3-Sulfophenyl)-N-[β-(β'-chlorethylsulfonyl)-ethyl]-amino,
N-(4-Sulfophenyl)-N-[β-(β'-chlorethylsulfonyl)-ethyl]-amino,
Bis-[β-(β'-chlorethylsulfonyl)-ethyl]-amino,
Bis-[β-(β'-bromethylsulfonyl)-ethyl]-amino,
Bis-[γ-(β'-chlorethylsulfonyl)-propyl]-amino,
Bis-[δ-(β'-chlorethylsulfonyl)-butyl]-amino,
Bis-(β-vinylsulfonyl-ethyl)-amino, N-(β-Cyanoethyl)-N-[γ'-(β''-chlorethylsulfonyl)-propyl]-amino,
β-[β'-(β''-Chlorethylsulfonyl)-ethylamino]-ethylamino,
β-[β'-(β''-Sulfatoethylsulfonyl)-ethylamino]-ethylamino,
β-[β'-(β''-Chlorethylsulfonyl)-ethoxy]-ethylamino,
β-[β'-(β''-Sulfatoethylsulfonyl)-ethoxy]-ethylamino,
4-[β-(β'-Chlorethylsulfonyl)-ethyl]-piperazin-1-yl,
4-[γ-(β'-Chlorethylsulfonyl)-propyl]-piperazin-1-yl,
4-[β-(β'-Sulfatoethylsulfonyl)-ethyl]-piperazin-1-yl,
4-[γ-(β'-Sulfatoethylsulfonyl)-propyl]-piperazin-1-yl,
3,4-Di-(β-sulfatoethylsulfonyl)-phenylamino,
2,5-Di-(β-sulfatoethylsulfonyl)-phenylamino,
4-[γ-(β'-Sulfatoethylsulfonyl)-propoxy]-phenylamino,
2,5-Bis-[(β-sulfatoethylsulfonyl)-methyl]-phenylamino,
3- oder 4-{N-[γ-(β'-Sulfatoethylsulfonyl)-propyl-amidocarbonyl]}-phenylamino und 3,5-Bis-{N-[γ-(β'-sulfatoethylsulfonyl)-propyl-amidocarbonyl}-phenylamino.

Reste G, die in den Verbindungen der allgemeinen Formel (1) enthalten sein können, sind beispielsweise 1,2-Ethylen, 1,3-Ethylen, 1,4-Butylen, 1,6-Hexylen, 1,3-Phenylen, 1,4-Phenylen, 4-Chlor-1,3-phenylen, 4-Methyl-1,3-phenylen, 4-Methoxy-1,3-phenylen, 4-Ethoxy-1,3-phenylen, 2-Methyl-1,4-phenylen, 2-Methoxy-1,4-phenylen, 2-Ethoxy-1,4-phenylen, 2-Chlor-1,4-phenylen, 2,5-Dimethyl-1,4-phenylen, 2-Methyl-5-methoxy-1,4-phenylen, 2,5-Dimethoxy-1,4-phenylen, 2,5-Diethoxy-1,4-phenylen, 2,4,6-Trimethyl-1,3-phenylen, 2,3,5,6-Tetramethyl-1,4-phenylen, 2-Sulfo-1,4-phenylen, 2,5-Disulfo-1,4-phenylen, 2,6-Disulfo-1,4-phenylen, 4-Sulfo-1,3-phenylen, 4,6-Disulfo-1,3-phenylen, 2-Chlor-5-sulfo-1,4-phenylen, 2-Methyl-5-sulfo-1,4-phenylen, 2-Carboxy-1,4-phenylen, 4-Carboxy-1,3-phenylen und Piperazin-1,4-ylen.

Reste der allgemeinen Formel $-NR^4R^5$ bzw. $-NR^6R^7$, die in den Verbindungen der allgemeinen Formel (1) enthalten sein können, sind beispielsweise Methylamino, Ethylamino, n-Butylamino, Benzylamino, Phenylamino, β-Hydroxy-ethylamino, Dimethylamino, Diethylamino, Di-(isopropyl)-amino, N-Methyl-benzylamino, N-Methyl-phenylamino, N-Piperidino, N-Morpholino, Di-(β-Hydroxyethyl)-amino, β-Sulfo-ethylamino, β-Carboxy-ethylamino, β-(4-Carboxy-phenyl)-ethylamino, 3-Sulfophenylamino, 4-Sulfophenylamino, die primäre Aminogruppe und der Cyanamidorest.

Die vorliegende Erfindung betrifft weiterhin Verfahren zur Herstellung der Phthalocyaninfarbstoffe der allgemeinen Formel (1), die dadurch gekennzeichnet sind, daß man eine Verbindung der allgemeinen Formel (4), in welcher die einzelnen Formelreste die für Formel (1) angegebenen Bedeutungen haben, mit einer Halogen-triazin-Verbindung der allgemeinen Formel (5), in welcher Hal für Halogen, wie Chlor und Fluor, steht und W, $R^3$, A, Y, Z und m eine der obengenannten Bedeutungen haben, umsetzt,
oder daß man eine Verbindung der allgemeinen Formel (6), in welcher die Formelreste die für Formel (1) angegebenen Bedeutungen haben, mit einer Aminoverbindung der allgemeinen Formel (7), in welcher $R^3$, A, Y und m eine der obengenannten Bedeutungen haben und Z' eine der für Z genannten Bedeutungen besitzt oder die β-Hydroxyethylsulfonyl-Gruppe ist, umsetzt, wobei man im Falle, daß Z' für die β-Hydroxyethylsulfonyl-Gruppe steht, die erhaltene β-hydroxyethylsulfonylgruppenhaltige Phthalocyaninverbindung in einen Phthalocyaninfarbstoff der Formel (1) mit einem Rest Z in an und für sich bekannter Verfahrensweise überführt,
oder daß man zur Herstellung eines Phthalocyaninfarbstoffes der Formel (1), in welcher W eine der oben für W genannten Aminogruppen bedeutet, eine Verbindung der allgemeinen Formel (8), in welcher die einzelnen Formelreste die für Formel (1) angegebenen Bedeutungen haben und Hal für Chlor oder Fluor steht, mit einem Amin der allgemeinen Formel
$HNR^6R^7$ mit $R^6$ und $R^7$ der obigen Bedeutung oder einem Amin der allgemeinen Formel (7) umsetzt.

Welche der beiden Verfahrensweisen zur Herstellung der erfindungsgemäßen Phthalocyaninfarbstoffe der Formel (1) bevorzugt eingesetzt oder zweckmäßig durchgeführt wird, richtet sich vor allem nach der Löslichkeit der beteiligten aminogruppenhaltigen Ausgangsverbindungen und deren Basizität.

Die erfindungsgemäßen Umsetzungen können in wäßrigem oder wäßrigorganischem Medium durchgeführt werden. Ist das Medium ein wäßrig-organisches Medium, so ist der organische Lösemittelanteil ein mit Wasser mischbares, gegenüber den Reaktanten und Reaktionsbedingungen inertes Lösemittel, wie beispielsweise Dimethylsulfoxyd, Aceton und ein N-Alkyl-acylamid, wie Dimethylformamid. Die Umsetzungen der aminogruppenhaltigen Phthalocyaninverbindungen oder der Amine mit den Halogentriazinverbindungen erfolgen in an und für sich üblicher Verfahrensweise unter den üblichen Verfahrensbedingungen, die für analoge Reaktionen zwischen Aminen oder Cyanamid und einem Halogentriazin bekannt sind (s. bspw. die Europäische Patentanmeldungs-Veröffentlichung Nr. 0 218 131A und die US-Patentschriften Nrs. 3 758 470 und 4 350 632). In der Regel erfolgt die Umsetzung zwischen einer Verbindung der allgemeinen Formel (4) und einem Halogentriazin der allgemeinen Formel (5) bei einer Temperatur zwischen 40 und 90 °C, bevorzugt zwischen 60 und 80 °C, und bei einem pH-Wert zwischen 2 und 7, bevorzugt zwischen 3 und 5. Die Umsetzung zwischen einer Verbindung der allgemeinen Formel (6) und einer Aminoverbindung der allgemeinen Formel (7) wird in der Regel bei einer Temperatur zwischen 30 und 80 °C, bevorzugt zwischen 60 und 70 °C, und bei einem pH-Wert zwischen 3 und 7, bevorzugt zwischen 3 und 5, durchgeführt. Die Verbindungen der allgemeinen Formel (8) werden mit den Aminoverbindungen der Formel $HNR^6R^7$ bzw. der allgemeinen Formel (7) in der Regel bei einer Temperatur zwischen 40 und 90 °C, bevorzugt zwischen 70 und 85 °C, und bei einem pH-Wert zwischen 2,5 und 6, bevorzugt zwischen 3 und 5, umgesetzt.

Die Ausgangsverbindungen der allgemeinen Formel (4) werden in an und für sich bekannter Weise der Umsetzung von Phthalocyaninsäurechloriden mit Aminoverbindungen hergestellt, so durch Umsetzung eines Phthalocyaninsäurechlorids der allgemeinen Formel (9),
in welcher

- Pc und M die obengenannten Bedeutungen haben,
- p eine ganze Zahl von 1 bis 4 bedeutet,
- q eine ganze Zahl von Null bis 3 ist,
- r eine ganze Zahl von Null bis 3 ist und
- s eine ganze Zahl von Null bis 3 bedeutet,

wobei die Summe von (p + q + r + s) eine ganze Zahl von 1 bis 4 ist,
die Summe von (p + q) eine Zahl von 1 bis 4 und
die Summe von (r + s) eine Zahl von Null bis 3 ist,
oder einer Mischung dieser Verbindungen der allgemeinen Formel (9) in einem wäßrigen oder wäßrigorganischen Medium mit einem Amin der allgemeinen Formel (10), in welcher $R^1$, $R^2$ und G die obengenannten Bedeutungen haben, und gegebenenfalls mit einem weiteren Amin der allgemeinen Formel (11) mit $R^4$ und $R^5$ der obengenannten Bedeutungen gleichzeitig oder in beliebiger Reihenfolge.

Bei der Umsetzung der Phthalocyaninsäurechloride der allgemeinen Formel (9) mit einer Aminoverbindung der allgemeinen Formel (10) oder den Aminen der allgemeinen Formel (10) und (11) kann während dieser Kondensationsreaktionen gleichzeitig eine partielle Hydrolyse der Carbonsäurechloridgruppen und eventuell vorhandener Sulfonsäurechloridgruppen erfolgen. In der Regel ist eine partielle Hydrolyse dieser Säurechloridgruppen zu Carboxy- bzw. Sulfogruppen unvermeidlich.

Die Ausgangsverbindungen der allgemeinen Formel (6) oder (8) erhält man ebenfalls analog bekannten Verfahrensweisen der Umsetzung von Aminoverbindungen oder Cyanamid mit Halogentriazin-Verbindungen oder einem Cyanurhalogenid (1,3,5-Halogeno-s-triazin), so durch Umsetzung einer Verbindung der allgemeinen Formel (10) mit einem Cyanurhalogenid, wie Cyanurchlorid oder Cyanurfluorid, oder einem Dihalogenos-triazin der allgemeinen Formel (12), in welcher Hal und W die obengenannten Bedeutungen haben, und einem Amin der allgemeinen Formel (7) oder Cyanamid in beliebiger Reihenfolge, wobei sich die Reihenfolge der verschiedenen Umsetzungen nach der Löslichkeit der beteiligten Aminoverbindungen bzw. dem Cyanamid und deren Basizität zu den Halogentriazinen richtet. Die Wahl dieser Verfahrensschritte ist dem Fachmann geläufig. Solche Verfahrensweisen sind beispielsweise aus der zuvor erwähnten Literatur und der europäischen Patentanmeldungs-Veröffentlichung Nr. 0 073 267A bekannt.

Geht man bei dem erfindungsgemäßen Verfahren zur Herstellung der Phthalocyaninverbindungen der allgemeinen Formel (1) von einem Ausgangsamin der Formel (5) aus, in welchem Z' die $\beta$-Hydroxyethylsulfonyl-Gruppe bedeutet, so überführt man die erhaltene Phthalocyaninverbindung, die der allgemeinen Formel (1) entspricht, in welcher jedoch Z hier die $\beta$-Hydroxyethylsulfonyl-Gruppe bedeutet in eine erfindungsgemäße Phthalocyaninverbindung, die in $\beta$-Stellung des Ethylsulfonylrestes eine Estergruppe, wie beispielsweise die Sulfatogruppe, enthält. Diese Veresterungsreaktion erfolgt analog bekannter Verfahrensweisen mit den üblichen Veresterungs- und Acylierungsmitteln für solche Säuren, wie beispielsweise Acetanhydrid, Polyphosphorsäure, Phosphorpentachlorid und insbesondere 96-100 %ige Schwefelsäure oder Schwefeltrioxyd enthaltende Schwefelsäure, wie Oleum mit einem Schwefeltrioxydgehalt von bis zu 35 %, oder Chlorsulfonsäure zur Einführung der Sulfatogruppe. Die Umsetzung mit Schwefelsäure oder Schwefeltrioxyd enthaltender Schwefelsäure erfolgt bei einer Temperatur zwischen 0 °C und 25 °C. Die Umsetzung mit Chlorsulfonsäure kann auch in einem polaren organischen Lösemittel, wie beispielsweise N-Methylpyrrolidon, bei 10 bis 80 °C erfolgen.

Phthalocyaninfarbstoffe der allgemeinen Formel (1) können in üblicher und bekannter Verfahrensweise in Phthalocyaninfarbstoffe der allgemeinen Formel (1) mit einem anderen alkalisch eliminierbaren Substituenten im faserreaktiven Rest Z überführt werden. Solche Verfahrensweisen sind in der Literatur, faserreaktive Farbstoffe mit dem faserreaktiven Rest der Vinylsulfonreihe betreffend, zahlreich beschrieben. So können Phthalocyaninfarbstoffe mit dem $\beta$-Sulfatoethylsulfonyl-Rest durch Behandlung mit einem Alkali, wie in wäßriger Natronlauge bei einer Temperatur von 0 bis 40 ° C während einiger Minuten, in die Phthalocyaninfarbstoffe mit der Vinylsulfonylgruppe für den Rest Z überführt werden. Erfindungsgemäße Phthalocyaninfarbstoffe mit dem $\beta$-Thiosulfatoethylsulfonyl-Rest lassen sich beispielsweise aus Phthalocyaninfarbstoffe mit der Vinylsulfonylgruppe durch Umsetzung mit Natriumthiosulfat gewinnen.

Die erfindungsgemäßen Kondensationsreaktionen zwischen den Verbindungen der allgemeinen Formel (9) und den Aminen der allgemeinen Formeln (10) und (11) erfolgen beispielsweise analog den Verfahrensweisen der deutschen Offenlegungsschriften Nrs. 28 42 640 und 34 05 204 bei einem pH-Wert zwischen 3,5 und 8,5, vorzugsweise zwischen 5 und 8, und bei einer Temperatur zwischen 0 ° C und 100 ° C, vorzugsweise zwischen 40 und 60 ° C.

Phthalocyaninsulfonsäurechloride und Phthalocyanincarbonsäurechloride sind seit langem in der Literatur bekannt. Die Herstellung der Phthalocyaninsulfonsäurechloride ergibt sich beispielsweise aus Angaben in den oben genannten US-Patentschriften sowie aus der deutschen Patentschrift Nr. 891 121. Phthalocyanincarbonsäurechloride können analog den Angaben der US-Patentschritt Nr. 3 301 814 hergestellt werden, wobei eine oder mehrere der Ausgangsverbindungen durch Carbonsäuregruppen substituiert sind. Die Überführung der so erhaltenen carboxysubstituierten Phthalocyanine in deren Carbonsäurechloridverbindungen erfolgt gemäß altbekannten Verfahrensweisen der Überführung von Carboxygruppen in Carbonsäurechloridgruppen. Phthalocyaninverbindungen, die sowohl Carbonsäurechlorid- als auch Sulfochlorid-Gruppen enthalten, können durch Sulfochlorierung der Phthalocyanincarbonsäure- oder -carbonsäurechlorid-Verbindungen erhalten werden.

Phthalocyanin-Ausgangsverbindungen der allgemeinen Formel (9) sind beispielsweise die gegebenenfalls sulfo- und/oder sulfonylgruppenhaltigen Carbonsäurechloride und die carboxygruppenhaltigen Carbonsäurechloride des metallfreien Phthalocyanins und vorzugsweise der Kupfer-, Kobalt- und Nickelphthalocyanine, wie beispielsweise die Mono-, Di-, Tri- und Tetracarbonsäurechlorid des Kupferphthalocyanins, Kobaltphthalocyanins und Nickelphthalocyanins, so beispielsweise Kupferphthalocyanin-(3)-monocarbonsäurechlorid, Kupferphthalocyanin-(3)-dicarbonsäurechlorid, Kupferphthalocyanin-(3)-tricarbonsäurechlorid, Kupferphthalocyanin-(3)-tetracarbonsäurechlorid, Nickelphthalocyanin-(3)-tetracarbonsäurechlorid, Kobaltphthalocyanin-(3)-monocarbonsäurechlorid, Kobaltphthalocyanin-(3)-di und -tricarbonsäurechlorid, Kupferphthalocyanin-(4)-mono und -dicarbonsäurechlorid Kupferphthalocyanin-(4)-tri und -tetracarbonsäurechlorid, Kupferphthalocyanin-(3)-monocarbonsäurechlorid-disulfonsäurechlorid, Kupferphthalocyanin-(3)-dicarbonsäurechlorid-monosulfonsäurechlorid, Kupferphthalocyanin-(3)-monocarbonsäurechlorid-monocarbonsäure, Kupferphthalocyanin-(3)-dicarbonsäurechlorid-monocarbonsäure und Kupferphthalocyanin-(3)-dicarbonsäurechlorid-disulfonsäurechlorid, sowie weiterhin die Säurechloride dieser Art, die am Phthalocyaninkern zusätzlich andere Substituenten, wie Phenylreste und Halogenatome, enthalten, wie beispielsweise die Carbonsäurechloride oder gemischten Carbonsäure-/Sulfonsäurechloride des Tetraphenylkupferphthalocyanins oder Tetrachlor-nickelphthalocyanins.

Säurebindende Mittel, die in dem erfindungsgemäßen Verfahren zur Herstellung der Phthalocyaninfarbstoffe der allgemeinen Formel (1) verwendet werden, sind beispielsweise die Hydroxyde, Carbonate, Hydrogencarbonate, sekundären Phosphate, tertiären Phosphate, Borate und Acetate der Metalle der ersten bis dritten Gruppe des Periodensystems, vorzugsweise der Alkalimetalle, wie von Natrium, Kalium und Lithium, und der Erdalkalimetalle, wie die des Calciums.

Das erfindungsgemäße Verfahren zur Herstellung der Verbindungen (1) wird bevorzugt in wäßrigem Medium durchgeführt. Zur Verbesserung der Löslichkeit der Ausgangs- bzw. Endprodukte im wäßrigen Reaktionsmedium kann man gegebenenfalls ein organisches Lösemittel, vorzugsweise ein Amid einer aliphatischen Carbonsäure, wie Dimethylformamid oder N-Methyl-pyrrolidon, zusetzen.

Die Abscheidung der erfindungsgemäß hergestellten Phthalocyaninfarbstoffe der allgemeinen Formel (1), nachfolgend als "Farbstoffe (1)" bezeichnet, aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Sie haben faserreaktive Eigenschaften und besitzen sehr gute Farbstoffeigenschaften. Sie können deshalb zum Färben und Bedrucken von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls

nach Konzentrierung, direkt als Flüssigpräparation der färberischen Verwendung zugeführt werden.

Gegenstand der vorliegenden Erfindung ist deshalb auch die Verwendung der Farbstoffe (1) zum Färben (einschließliches Bedrucken) von hydroxy- und carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Farbstoffe (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen in sehr guten Farbausbeuten und mit ausgezeichnetem Farbaufbau. Man färbt bei Temperaturen zwischen 40 und 105 °C, gegebenenfalls bei Temperaturen bis zu 130 °C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls Färbungen mit ausgezeichneten Farbausbeuten und sehr gutem Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls erhält man nach den üblichen Druckverfahren für Cellulosefasern, - die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103 °C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch. Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen.
Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe (1) mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetsungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit den erfindungsgemäßen Verbindungen (1) hergestellten Färbungen und Drucke auf Cellulosefasermaterialien besitzen eine hohe Farbstärke, außerdem gute Lichtechtheiten und gute Naßechtheiten, wie Wasch-, Walk-, Wasser-, Seewasser-, Überfärbe- und Schweißechtheiten, darüber hinaus eine gute Plissierechtheit, Bügelechtheit und Reibechtheit. Besonders hervorzuheben sind deren alkalische Schweißlichtechtheit und die gute Naßlichtechtheit der mit Trinkwasser benetzten Färbungen.

Die nachstehenden Beispiele dienen zur Erläuterung der Erfindung. Die formelmäßig beschriebenen Verbindungen sind in Form der freien Säure angegeben; im allgemeinen werden sie in Form ihrer Alkalimetallsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.
Die in den Beispielen genannten Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter. Der Formelrest CuPc bedeutet den Kupferphthalocyaninrest, und der Formelrest NiPc stellt den Nickelphthalocyaninrest dar.

Die für die erfindungsgemäßen Verbindungen angegebenen Absorptionsmaxima ($\lambda_{max}$) im sichtbaren Bereich wurden anhand ihrer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel A

299 Teile Phthalsäureanhydrid werden mit 131 Teilen Benzoltricarbonsäureanhydrid, 78 Teilen Ammoniumchlorid, 952 Teilen Harnstoff, 12 Teilen Ammoniummolybdat und 200 Teilen Kupfersulfat vermahlen. Die Mischung trägt man in 800 Teile Nitrobenzol ein und führt die Umsetzung bei einer Temperatur zwischen 160 und 190 °C während mehrerer Stunden durch. Nach Beendigung der Reaktion wird das ausgefallene Produkt abfiltriert, mit Ethanol gewaschen, sodann in eine 20%ige wäßrige Natronlauge eingetragen, darin verrührt und wiederum abgesaugt, mit etwas Wasser gewaschen und getrocknet. Zur Umkristallisation der erhaltenen Kupferphthalocyanin-monocarbonsäure löst man sie in konz. Schwefelsäure, rührt diese Lösung langsam in Eis ein und filtriert die ausgefallene Kupferphthalocyaninmonocarbonsäure ab.

Beispiel B

63,8 Teile Kupferphthalocyanin-monocarbonsäure werden in 100 Teile Chlorsulfonsäure eingetragen, und die beiden Reaktanten werden während etwa vier Stunden bei einer Temperatur zwischen 120 und 130 °C miteinander umgesetzt. Anschließend gibt man 44 Teile Thionylchlorid hinzu und führt die Umsetzung während etwa vier Stunden bei 60 bis 90 °C durch. Danach gibt man den Reaktionsansatz auf Eis und filtriert den Rückstand ab. Man erhält ein chlorsulfonylgruppenhaltiges Kupferphthalocyanin-monocarbonsäurechlorid mit durchschnittlich 2,1 Sulfonylchloridgruppen im Molekül.

Beispiel C

Man gibt 78 Teile Kupferphthalocyanin-monocarbonsäure in 200 Teile Chlorsulfonsäure und erhitzt den Ansatz während etwa vier Stunden bei einer Temperatur zwischen 140 und 150 °C. Anschließend gibt man 100 Teile Thionylchlorid hinzu und führt die Umsetzung während etwa vier Stunden bei 70 bis 90 °C durch. Nach Beendigung der Reaktion gibt man den Ansatz auf Eis und filtriert den Rückstand ab. Es wird ein chlorsulfonylgruppenhaltiges Kupferphthalocyanin-monocarbonsäurechlorid mit durchschnittlich zwei Sulfonylchloridgruppen im Molekül erhalten.

Beispiel D

Man trägt 350 Teile Kupferphthalocyanin-monocarbonsäure in 1000 Teile Chlorsulfonsäure ein, erhitzt den Ansatz während etwa vier Stunden bei einer Temperatur zwischen 153 und 156 °C, gibt danach 430 Teile Thionylchlorid hinzu, hält den Ansatz während etwa vier Stunden bei 60 bis 90 °C und gibt nach Beendigung dieser Reaktion die erhaltene Reaktionslösung auf Eis und filtriert den Rückstand ab. Man erhält ein chlorsulfonylgruppenhaltiges Kupferphthalocyanin-monocarbonsäurechlorid, das im Molekül durchschnittlich 2,5 Sulfonylchloridgruppen enthält.

Beispiel E

Zur Herstellung der Nickelphthalocyanin-monocarbonsäure werden 299 Teile Phthalsäureanhydrid mit 131 Teilen Benzoltricarbonsäureanhydrid, 78 Teilen Ammoniumchlorid, 952 Teilen Harnstoff, 12 Teilen Ammoniummolybdat und 180 Teile Nickelsulfat vermahlen. Die Mischung trägt man in 800 Teile Nitrobenzol ein und führt die Umsetzung bei einer Temperatur zwischen 160 und 190 °C während mehrerer Stunden durch. Nach Beendigung der Reaktion wird das ausgefallene Produkt abfiltriert, mit Ethanol gewaschen, sodann in eine 20%ige wäßrige Natronlauge eingetragen, darin verrührt und wiederum abgesaugt, mit etwas Wasser gewaschen und getrocknet. Zur Umkristallisation der erhaltenen Nickelphthalocyanin-monocarbonsäure löst man sie in konz. Schwefelsäure, rührt diese Lösung langsam in Eis ein und filtriert die ausgefallene Nickelphthalocyanin-monocarbonsäure ab.

Beispiel F

Man trägt 350 Teile Nickelphthalocyanin-monocarbonsäure in 1000 Teile Chlorsulfonsäure ein, erhitzt den Ansatz während etwa vier Stunden bei einer Temperatur zwischen 153 und 156 °C, gibt danach 430 Teile Thionylchlorid hinzu, hält den Ansatz während etwa vier Stunden bei 60 bis 90 °C und gibt nach Beendigung dieser Reaktion die erhaltene Reaktionslösung auf Eis und filtriert den Rückstand ab. Man erhält ein chlorsulfonylgruppenhaltiges Nickelphthalocyanin-monocarbonsäurechlorid, das im Molekül durchschnittlich 2,5 Sulfonylchloridgruppen enthält.

Beispiel 1

Eine Mischung von 156 Teilen Chlorsulfonyl-Kupferphthalocyaninmonocarbonsäurechlorid (mit durchschnittlich 2,5 Sulfonylchloridgruppen im Molekül von Beispiel D), 75 Teilen 3-Amino-acetanilid und 1000 Teilen Wasser werden unter Einhaltung eines pH-Wertes von 5 bis 7 bei einer Temperatur von 40 bis 70 °C 10 bis 15 Stunden gerührt. Danach gibt man 357 Teile konzentrierte Schwefelsäure hinzu und rührt den Ansatz bei 80 bis 90 °C noch 3 bis 5 Stunden nach. Anschließend gibt man zu dieser Reaktionslösung 95 Teile Cyanurchlorid und führt die Umsetzung bei einer Temperatur von 0 bis 10 °C und einem pH-Wert von 4 bis 6 durch. Für die weitere Kondensationsreaktion gibt man 145 Teile 4-($\beta$-Sulfatoethylsulfonyl)-anilin hinzu und führt diese letzte Kondensationsreaktion bei einem pH-Wert von 3 bis 6 und einer Temperatur von 0 bis 40 °C aus.

Aus der erhaltenen klaren blaugrünen Lösung isoliert man den erfindungsgemäßen Phthalocyaninfarbstoff auf üblichem Wege durch Eindampfen der Lösung oder durch Aussalzen mit einem Elektrolytsalz. Man erhält ein elektrolythaltiges Farbstoffpulver mit einem erfindungsgemäßen Farbstoff, dessen chemische Konstitution durch die, in Form der freien Säure geschrieben, Formel (20) (Formel s. Formelblätter nach dem letzten Beispiel) wiedergegeben werden kann. Im sichtbaren Bereich besitzt er ein Absorptionsmaximum bei 663 nm.

Der erfindungsgemäße Phthalocyaninfarbstoff besitzt sehr gute faserreaktive Farbstoffeigenschaften und liefert nach den in der Technik für faserreaktive Farbstoffe üblichen Applikations- und Fixierverfahren auf den in der Beschreibung genannten Materialien, wie insbesondere Cellulosefasermaterialien (Baumwolle), farbstarke Färbungen und Drucke von grüner bis türkisblauer Nuance, die gute Echtheitseigenschaften aufweisen.

Beispiel 2

Zur Herstellung einer erfindungsgemäßen Kupferphthalocyaninverbindung verfährt man gemäß der Verfahrensweise des Beispieles 1, setzt jedoch in der letzten Reaktionsstufe anstelle des 4-($\beta$-Sulfatoethylsulfonyl)-anilins die gleiche Menge an 3-($\beta$-Sulfatoethylsulfonyl)-anilin ein.

Auch dieser erfindungsgemäße Kupferphthalocyaninfarbstoff besitzt sehr gute faserreaktive, färberische Eigenschaften, die denen des Farbstoffes des Beispieles 1 praktisch gleich sind. Er besitzt im sichtbaren Bereich ein Absorptionsmaximum bei 663 nm und liefert, in gleicher Weise wie der Farbstoff des Beispieles 1, farbstarke grüne bis türkisblaue Färbungen mit guten Echtheiten.

Beispiel 3

Zur Herstellung einer erfindungsgemäßen Kupferphthalocyaninverbindung setzt man zunächst gemäß den Angaben des Beispieles 1 das Chlorsulfonyl-Kupferphthalocyanin-monocarbonsäurechlorid mit 3-Amino-acetanilid um und hydrolysiert die Acetylaminogruppe, wie im Beispiel 1 angegeben, mit Schwefelsäure.
In einem getrennten Ansatz stellt man die Monochlor-triazin-Ausgangsverbindung her, indem man 95 Teile Cyanurchlorid bei 0 bis 10 ° C und einem pH-Wert von 8 bis 9 mit 21 Teilen Cyanamid umsetzt und danach zu dieser Lösung 145 Teile 4-($\beta$-Sulfatoethylsulfonyl)-anilin hinzufügt; die zweite Kondensationsreaktion führt man bei 0 bis 40 ° C und einem pH-Wert von 3 bis 4 durch.

Bei beiden Reaktionslösungen werden vereinigt; man führt die dritte Kondensationsreaktion bei einem pH-Wert von 3 bis 4 und einer Temperatur von 40 bis 90 ° C während etwa 8 Stunden durch.
Aus der erhaltenen blaugrünen Lösung wird der erfindungsgemäße Phthalocyaninfarbstoff, dessen chemische Zusammensetzung durch die, in Form der freien Säure geschrieben, Formel (21) (Formel s. Formelblätter nach dem letzten Beispiel) wiedergegeben werden kann, in üblicher Weise durch Eindampfen oder durch Aussalzen mit einem Elektrolytsalz isoliert. Der erfindungsgemäße Farbstoff besitzt im sichtbaren Bereich ein Absorptionsmaximum bei 663 nm; er zeigt sehr gute faserreaktive Farbstoffeigenschaften und färbt beispielweise Baumwolle nach den in der Technik für faserreaktive Farbstoffe üblichen Applikations- und Fixierverfahren in farbstarken grünen bis türkisblauen Tönen, die gute Echtheitseigenschaften aufweisen.

Beispiel 4

Zur Herstellung eines erfindungsgemäßen Kupferphthalocyaninfarbstoffs verfährt man gemäß der Verfahrensweisen des Beispieles 3, setzt jedoch bei der Herstellung der Chlortriazin-Ausgangsverbindung anstelle des 4-($\beta$-Sulfatoethylsulfonyl)anilins das 3-($\beta$-Sulfatoethylsulfonyl)-anilin in gleicher Menge ein.

Der so erhaltene, in dieser Aminokomponente zum Farbstoff des Beispieles 3 isomere erfindungsgemäße Kupferphthalocyaninfarbstoff besitzt im sichtbaren Bereich ein Absorptionsmaximum bei 663 nm und färbt nach den für faserreaktive Farbstoffe üblichen Färbeverfahren die in der Beschreibung genannten Materialien, wie insbesondere Cellulosefasermaterialien, in grünen bis türkisblauen Tönen mit guten Echtheitseigenschaften.

Beispiel 5

Man rührt unter Einhaltung eines pH-Wertes von 5 bis 7 eine Mischung von 156 Teilen Chlorsulfonyl-Kupferphthalocyanin-monocarbonsäurechlorid (mit durchschnittlich 2,5 Sulfonylchloridgruppen im Molekül von Beispiel D), 94 Teilen 1,3-Diaminobenzol-6-sulfonsäure und 1000 Teilen Wasser bei 40 bis 50 ° C während 10 bis 15 Stunden. Danach kühlt man die Reaktionslösung ab, gibt 95 Teile Cyanurchlorid hinzu und führt die Umsetzung bei 0 bis 10 ° C und einem pH-Wert von 4 bis 6 durch. Die dritte Kondensationsreaktion führt man nach Zugabe von 145 Teilen 4-($\beta$-Sulfatoethylsulfonyl)anilin bei einer Temperatur von 0 bis 40 ° C und einem pH-Wert von 3 bis 4 während etwa vier Stunden aus.
Aus der klaren blaugrünen Lösung isoliert man den erfindungsgemäßen Phthalocyaninfarbstoff, dessen Konstitution mit der allgemeinen Formel (22) (Formel s. Formelblätter nach dem letzten Beispiel) wiedergegeben werden kann, in üblicher Weise durch Eindampfen unter reduziertem Druck, durch Sprühtrocknung oder durch Aussalzen mit einem Elektrolyt, wie Natriumchlorid.

Der erfindungsgemäße Kupferphthalocyaninfarbstoff besitzt im sichtbaren Bereich ein Absorptionsmaximum bei 663 nm. Er zeigt sehr gute faserreaktive Farbstoffeigenschaften und liefert farbstarke grüne bis türkisblaue Färbungen und Drucke mit guten Echtheitseigenschaften.

Beispiele 6 bis 87

In den nachfolgenden Tabellenbeispielen sind weitere erfindungsgemäße Phthalocyaninverbindungen entsprechend der allgemeinen Formel (A) (Formel s. Formelblätter nach dem letzten Beispiel) mit Hilfe von

deren Formelkomponenten beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (A) ersichtlichen Komponenten (so einem sulfonylgruppenhaltigen und gegebenenfalls sulfogruppenhaltigen Kupferphthalocyanin-mono- oder -dicarbonsäurechlorid, Cyanurchlorid oder einem in 6-Stellung substituierten 2,4-Dichlor-s-triazin, einer Aminoverbindung entspechend der in der Beschreibung angegebenen allgemeinen Formel (2) und einer gegebenenfalls substituierten Diaminobenzol-Verbindung) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton.

| Bsp. | Rest $R^A$ | W | R | A | (C+D) | Farbton |
|---|---|---|---|---|---|---|
| 6 | ß-[ß'-(ß"-Chlorethylsulfonyl)-ethoxy]-ethylamino | Chlor | H | 1,3 | 2,1 | grün (670) |
| 7 | 2-(ß-Sulfatoethylsulfonyl)-phenylamino | Chlor | H | 1,1 | 2,4 | grün (663) |
| 8 | 2-Methoxy-5-(ß-sulfatoethyl-sulfonyl)-phenylamino | Chlor | H | 1,1 | 2,4 | grün (661) |
| 9 | 2-Methoxy-4-(ß-sulfatoethyl-sulfonyl)-phenylamino | Chlor | H | 1,2 | 2,2 | grün (661) |
| 10 | N-Ethyl-4-(ß-sulfatoethylsulfonyl)-phenylamino | Chlor | H | 1,1 | 2,4 | grün (662) |
| 11 | N-Ethyl-3-(ß-sulfatoethylsulfonyl)-phenylamino | Chlor | H | 1,1 | 2,4 | grün (662) |
| 12 | 2-Sulfo-5-(ß-sulfatoethylsulfonyl)-phenylamino | Chlor | H | 1,3 | 2,2 | grün (664) |

| Bsp. | Rest $R^A$ | W | R | A | (C+D) | Farbton |
|---|---|---|---|---|---|---|
| 13 | 2-Carboxy-5-(ß-sulfatoethylsulfonyl)-phenylamino | Chlor | H | 1,1 | 2,4 | grün (664) |
| 14 | 2-Hydroxy-5-(ß-sulfatoethylsulfonyl)-phenylamino | Chlor | H | 1,1 | 2,4 | grün (663) |
| 15 | 2-Hydroxy-4-(ß-sulfatoethylsulfonyl)-phenylamino | Chlor | H | 1,1 | 2,4 | grün (663) |
| 16 | 3-(ß-Sulfatoethylsulfonyl)-propylamino | Chlor | H | 1,1 | 2,4 | grün (661) |
| 17 | 3-(ß-Chlorethylsulfonyl)-propylamino | Chlor | H | 1,1 | 2,4 | grün (661) |
| 18 | ß-[4-(ß'-Sulfatoethylsulfonyl)-phenyl]-ethylamino | Chlor | H | 1,1 | 2,4 | grün (661) |
| 19 | ß-[3-Sulfo-4-(ß'-sulfatoethylsulfonyl)-phenyl]-ethylamino | Chlor | H | 1,3 | 2,2 | grün (663) |
| 20 | Bis-[ß-(ß'-chlorethylsulfonyl)-ethyl]-amino | Chlor | H | 1,1 | 2,4 | grün (661) |
| 21 | 3,4-Di-(ß-sulfatoethylsulfonyl)-phenylamino | Chlor | H | 1,1 | 2,4 | grün (663) |

| Bsp. | Rest $R^A$ | W | R | A | (C+D) | Farbton |
|---|---|---|---|---|---|---|
| 22 | 2,5-Di-(ß-sulfatoethylsulfonyl)-phenylamino | Chlor | H | 1,1 | 2,4 | grün (673) |
| 23 | ß-(ß'-Sulfatoethylsulfonyl)-ethylamino | Chlor | H | 1,1 | 2,4 | grün (670) |
| 24 | ß-[ß'-(ß"-Chlorethylsulfonyl)-ethoxy]-ethylamino | N-Ethyl-ß-sulfoethylamino | Sulfo | 1,3 | 2,1 | grün (670) |
| 25 | 4-(ß-Sulfatoethylsulfonyl)-phenylamino | Methoxy | H | 1,1 | 2,4 | grün (672) |
| 26 | 3-(ß-Sulfatoethylsulfonyl)-phenylamino | Methoxy | H | 1,1 | 2,4 | grün (672) |
| 27 | N-Ethyl-4-(ß-sulfatoethylsulfonyl)-phenylamino | Cyanamido | H | 1,1 | 2,4 | grün (671) |
| 28 | N-Ethyl-3-(ß-sulfatoethylsulfonyl)-phenylamino | Cyanamido | H | 1,1 | 2,4 | grün (671) |
| 29 | 2-Sulfo-5-(ß-sulfatoethylsulfonyl)-phenylamino | Cyanamido | H | 1,3 | 2,4 | grün (671) |
| 30 | 3-(ß-Sulfatoethylsulfonyl)-propylamino | Cyanamido | H | 1,1 | 2,4 | grün (670) |

| Bsp. | Rest $R^A$ | W | R | A | (C+D) | Farbton |
|---|---|---|---|---|---|---|
| 31 | 3-(β-Chlorethylsulfonyl)-propylamino | Cyanamido | H | 1,1 | 2,4 | grün (670) |
| 32 | β-(β'-Sulfatoethylsulfonyl)-ethylamino | Cyanamido | H | 1,1 | 2,4 | grün (670) |
| 33 | β-(β'-Chlorethylsulfonyl)-ethylamino | Chlor | H | 1,1 | 2,4 | grün (670) |
| 34 | dito | Cyanamido | H | 1,1 | 2,4 | grün (670) |
| 35 | β-[β'-(β''-Sulfatoethylsulfonyl)-ethoxy]-ethylamino | Cyanamido | H | 1,1 | 2,4 | grün (671) |
| 36 | β-[β'-(β''-Chlorethylsulfonyl)-ethoxy]-ethylamino | N-Ethyl-sulfo-ethylamino | Sulfo | 1,3 | 2,1 | grün (670) |
| 37 | β-(β'-Sulfatoethylsulfonyl)-ethylamino | N-Ethyl-β-sulfo-ethylamino | Sulfo | 1,3 | 2,1 | grün (670) |
| 38 | 4-(β-Sulfatoethylsulfonyl)-phenylamino | dito | H | 1,1 | 2,4 | grün (671) |
| 39 | 3-(β-Sulfatoethylsulfonyl)-phenylamino | dito | H | 1,1 | 2,4 | grün (672) |

| Bsp. | Rest $R^A$ | W | R | A | (C+D) | Farbton |
|---|---|---|---|---|---|---|
| 40 | N-Ethyl-4-(ß-sulfatoethylsulfonyl)-phenylamino | dito | H | 1,1 | 2,4 | grün (671) |
| 41 | N-Ethyl-3-(ß-sulfatoethylsulfonyl)-phenylamino | dito | H | 1,1 | 2,4 | grün (671) |
| 42 | 2-Sulfo-4-(ß-sulfatoethylsulfonyl)-phenylamino | dito | H | 1,3 | 2,4 | grün (673) |
| 43 | 3-(ß-Sulfatoethylsulfonyl)-propylamino | dito | H | 1,1 | 2,4 | grün (670) |
| 44 | 3-(ß-Chlorethylsulfonyl)-propylamino | dito | H | 1,1 | 2,4 | grün (670) |
| 45 | ß-(ß'-Sulfatoethylsulfonyl)-ethylamino | dito | H | 1,1 | 2,4 | grün (670) |
| 46 | ß-(ß'-Chlorethylsulfonyl)-ethylamino | dito | H | 1,1 | 2,4 | grün (670) |
| 47 | ß-[ß'-(ß"-Sulfatoethylsulfonyl)-ethoxy]-ethylamino | dito | H | 1,1 | 2,4 | grün (670) |
| 48 | ß-(ß'-Chlorethylsulfonyl)-ethylamino | dito | Sulfo | 1,3 | 2,1 | grün (670) |

| Bsp. | Rest $R^A$ | W | R | A | (C+D) | Farbton |
|---|---|---|---|---|---|---|
| 49 | β-[β'-(β"-Chlorethylsulfonyl)-ethoxy]-ethylamino | dito | H | 1,1 | 2,4 | grün (670) |
| 50 | 3-(β-Chlorethylsulfonyl)-propylamino | dito | H | 1,3 | 2,1 | grün (670) |
| 51 | 2-(β-Sulfatoethylsulfonyl)-phenylamino | Chlor | Sulfo | 1,3 | 2,1 | grün (672) |
| 52 | 2-Methoxy-5-(β-sulfatoethylsulfonyl)-phenylamino | Chlor | Sulfo | 1,3 | 2,1 | grün (671) |
| 53 | 2-Methoxy-4-(β-sulfatoethylsulfonyl)-phenylamino | Chlor | Sulfo | 1,3 | 2,1 | grün (671) |
| 54 | N-Ethyl-4-(β-sulfatoethylsulfonyl)-phenylamino | Chlor | Sulfo | 1,3 | 2,1 | grün (671) |
| 55 | N-Ethyl-3-(β-sulfatoethylsulfonyl)-phenylamino | Chlor | Sulfo | 1,3 | 2,1 | grün (671) |
| 56 | 2-Sulfo-5-(β-sulfatoethylsulfonyl)-phenylamino | Chlor | Sulfo | 1,3 | 2,1 | grün (673) |

| Bsp. | Rest $R^A$ | W | R | A | (C+D) | Farbton |
|---|---|---|---|---|---|---|
| 57 | 2-Carboxy-4-(ß-sulfatoethylsulfonyl)-phenylamino | Chlor | Sulfo | 1,3 | 2,1 | grün (673) |
| 58 | 2-Carboxy-4-(ß-sulfatoethylsulfonyl)-phenylamino | Chlor | Sulfo | 1,3 | 2,1 | grün (672) |
| 59 | 2-Carboxy-5-(ß-sulfatoethylsulfonyl)-phenylamino | Chlor | Sulfo | 1,3 | 2,1 | grün (672) |
| 60 | 3-(ß-Sulfatoethylsulfonyl)-propylamino | Chlor | Sulfo | 1,3 | 2,1 | grün (670) |
| 61 | 3-(ß-Chlorethylsulfonyl)-propylamino | Chlor | Sulfo | 1,3 | 2,1 | grün (670) |
| 62 | ß-[4-(ß'-Sulfatoethylsulfonyl)-phenyl]-ethylamino | Chlor | Sulfo | 1,3 | 2,1 | grün (670) |
| 63 | ß-[2-Sulfo-5-(ß'-sulfatoethylsulfonyl)-phenyl]-ethylamino | Chlor | Sulfo | 1,3 | 2,1 | grün (673) |
| 64 | Bis-[ß-(ß'-chlorethylsulfonyl)-ethyl]-amino | Chlor | Sulfo | 1,3 | 2,1 | grün (670) |
| 65 | 3,4-Di-(ß-sulfatoethylsulfonyl)-phenylamino | Chlor | Sulfo | 1,3 | 2,1 | grün (670) |

| Bsp. | Rest $R^A$ | W | R | A | (C+D) | Farbton |
|---|---|---|---|---|---|---|
| 66 | 2,5-Di-(ß-sulfatoethylsulfonyl)-phenylamino | Chlor | Sulfo | 1,3 | 2,1 | grün (673) |
| 67 | ß-(ß'-Sulfatoethylsulfonyl)-ethylamino | Chlor | Sulfo | 1,3 | 2,1 | grün (670) |
| 68 | 3-(ß-Sulfatoethylsulfonyl)-propylamino | N-Ethyl-ß-sulfo-ethylamino | Sulfo | 1,3 | 2,1 | grün (670) |
| 69 | 4-(ß-Sulfatoethylsulfonyl)-phenylamino | Cyanamido | Sulfo | 1,3 | 2,1 | grün (672) |
| 70 | 3-(ß-Sulfatoethylsulfonyl)-phenylamino | Cyanamido | Sulfo | 1,3 | 2,1 | grün (672) |
| 71 | N-Ethyl-4-(ß-sulfatoethylsulfonyl)-phenylamino | Cyanamido | Sulfo | 1,3 | 2,1 | grün (671) |
| 72 | N-Ethyl-3-(ß-sulfatoethylsulfonyl)-phenylamino | Cyanamido | Sulfo | 1,3 | 2,1 | grün (671) |
| 73 | 2-Sulfo-5-(ß-sulfatoethylsulfonyl)-phenylamino | Cyanamido | Sulfo | 1,3 | 2,1 | grün (673) |
| 74 | 3-(ß-Sulfatoethylsulfonyl)-propylamino | Cyanamido | Sulfo | 1,3 | 2,1 | grün (670) |

| Bsp. | Rest $R^A$ | W | R | A | (C+D) | Farbton |
|---|---|---|---|---|---|---|
| 75 | 3-(ß-Chlorethylsulfonyl)-propylamino | Cyanamido | Sulfo | 1,3 | 2,1 | grün (670) |
| 76 | ß-(ß'-Sulfatoethylsulfonyl)-ethylamino | Cyanamido | Sulfo | 1,3 | 2,1 | grün (670) |
| 77 | ß-(ß'-Chlorethylsulfonyl)-ethylamino | Cyanamido | Sulfo | 1,3 | 2,1 | grün (670) |
| 78 | ß-[ß'-(ß"-Sulfatoethylsulfonyl)-ethoxy]-ethylamino | Cyanamido | Sulfo | 1,2 | 2,1 | grün (670) |
| 79 | ß-[ß'-(ß"-Chlorethylsulfonyl)-ethoxy]-ethylamino | Cyanamido | Sulfo | 1,3 | 2,1 | grün (670) |
| 80 | N-Ethyl-4-(ß-sulfatoethylsulfonyl)-phenylamino | N-Ethyl-ß-sulfo-ethylamino | Sulfo | 1,3 | 2,1 | grün (671) |
| 81 | 2-Sulfo-5-(ß-sulfatoethylsulfonyl)-phenylamino | dito | Sulfo | 1,3 | 2,1 | grün (673) |
| 82 | 4-(ß-Sulfatoethylsulfonyl)-phenylamino | dito | Sulfo | 1,3 | 2,1 | grün (672) |
| 83 | 3-(ß-Sulfatoethylsulfonyl)-phenylamino | dito | Sulfo | 1,3 | 2,1 | grün (672) |

| Bsp. | Rest $R^A$ | W | R | A | (C+D) | Farbton |
|---|---|---|---|---|---|---|
| 84 | N-Ethyl-3-(β-sulfatoethylsulfonyl)-phenylamino | dito | Sulfo | 1,3 | 2,1 | grün (671) |
| 85 | β-(β'-Chlorethylsulfonyl)-ethylamino | Chlor | Sulfo | 1,3 | 2,1 | grün (670) |
| 86 | β-[β'-(β''-Sulfatoethylsulfonyl)-ethoxy]-ethylamino | Chlor | H | 1,3 | 2,1 | grün (670) |
| 87 | β-(β'-Chlorethylsulfonyl)-ethylamino | Chlor | H | 1,3 | 2,1 | grün (669) |

Beispiel 88

Eine Mischung aus 156 Teilen Chlorsulfonyl-Kupferphthalocyaninmonocarbonsäurechlorid (mit durchschnittlich 2,5 Sulfonylchloridgruppen im Molekül von Beispiel D), 30 Teilen 1,2-Diaminoethan und 400 Teilen Wasser wird bei 20 bis 50 ° C etwa 12 Stunden unter Einhaltung eines pH-Wertes von 5 bis 7 gerührt. Danach kühlt man den Ansatz ab und gibt bei 0 bis 10 ° C 95 Teile Cyanurchlorid hinzu und führt die Umsetzung innerhalb dieses Temperaturbereiches und bei einem pH-Wert von 4 bis 6 zu Ende. Danach

gibt man 145 Teile 4-(β-Sulfatoethylsulfonyl)-anilin hinzu und führt die zweite Kondensationsreaktion bei einer Temperatur zwischen 0 und 40 °C und einem pH-Wert zwischen 3 und 6 während etwa 4 Stunden durch.

Der so synthetisierte erfindungsgemäße Kupferphthalocyaninfarbstoff, dessen chemische Zusammensetzung durch die, in Form der freien Säure geschrieben, Formel (23) (Formel s. Formelblätter nach dem letzten Beispiel) wiedergegeben werden kann, wird aus der Syntheselösung durch Eindampfen, Sprühtrocknung oder Aussalzen mit einem Elektrolytsalz isoliert. Er besitzt im sichtbaren Bereich ein Absorptionsmaximum bei 672 nm und zeichnet sich durch sehr gute faserreaktive Farbstoffeigenschaften aus. Nach den in der Technik für faserreaktive Farbstoffe üblichen Färbeweisen erhält man farbstarke, echte, grüne bis türkisblaue Färbungen und Drucke.

Beispiel 89

Zur Herstellung eines erfindungsgemäßen Kupferphthalocyaninfarbstoffes verfährt man gemäß der Verfahrensweise des Beispieles 88, verwendet hierbei jedoch anstelle des 4-(β-Sulfatoethylsulfonyl)-anilins als eine der Ausgangsverbindungen das isomere 3-(β-Sulfatoethylsulfonyl)-anilin.
Man erhält einen Farbstoff mit praktisch gleicher Qualität wie der des Beispieles 88. Er besitzt im sichtbaren Bereich ein Absorptionsmaximum bei 672 nm und liefert beispielsweise auf Baumwolle farbstarke, echte, grüne bis türkisblaue Färbungen.

Beispiel 90

Eine Mischung aus 156 Teilen eines Chlorsulfonyl-Kupferphthalocyanincarbonsäurechlorids (mit durchschnittlich 1 Carbonsäurechloridgruppe und 2,5 Sulfonsäurechloridgruppen im Molekül), 30 Teilen 1,2-Diaminoethan und 400 Teilen Wasser werden unter Einhaltung eines pH-Wertes von 5 bis 7 während etwa 12 Stunden bei einer Temperatur von 20 bis 50 °C gerührt.
In einem getrennten Ansatz setzt man 95 Teile Cyanurchlorid bei 0 bis 10 °C und einem pH-Wert von 8 bis 10 in 800 Teilen Wasser mit 21 Teilen Cyanamid um. Nach beendeter Reaktion gibt man zu dieser Lösung 145 Teile 4-(β-Sulfatoethylsulfonyl)-anilin und führt die zweite Kondensationsreaktion bei 0 bis 40 °C und einem pH-Wert von 3 bis 6 während mehrerer Stunden durch.

Der Ansatz mit der Chlortriazinverbindung und die Lösung mit der Kupferphthalocyaninverbindung werden zusammengegeben, und die Kondensationsreaktion zwischen beiden Verbindungen erfolgt bei einem pH-Wert von 3 bis 7 und einer Temperatur von 40 bis 90 °C während etwa 10 Stunden.

Aus der erhaltenen klaren blaugrünen Lösung wird der erfindungsgemäße Kupferphthalocyaninfarbstoff durch Eindampfen, Sprühtrocknen oder Aussalzen mit einem Elektrolytsalz isoliert. Seine chemische Konstitution kann durch die, in Form der freien Säure geschrieben, Formel (24) (Formel s. Formelblätter nach dem letzten Beispiel) wiedergegeben werden. Er besitzt im sichtbaren Bereich ein Absorptionsmaximum bei 672 nm und zeichnet sich durch sehr gute faserreaktive Farbstoffeigenschaften aus. Nach den in der Technik für faserreaktive Farbstoffe üblichen Färbeweisen liefert er auf den in der Beschreibung genannten Materialien, wie beispielsweise Cellulosefasermaterialien, farbstarke, echte, grüne bis türkisblaue Färbungen und Drucke.

Beispiel 91

156 Teile des chlorsulfonylgruppenhaltigen Kupferphthalocyanin-monocarbonsäurechlorid von Beispiel D und 30 Teile 1,2-Diamino-ethan werden in 400 Teile Wasser eingerührt, und die Umsetzung wird bei einer Temperatur zwischen 20 und 50 °C während 10 bis 15 Stunden unter Einhaltung eines pH-Wertes von 5 bis 7 durchgeführt.
Getrennt hiervon setzt man 95 Teile Cyanurchlorid mit 21 Teilen Cyanamid bei einer Temperatur zwischen 0 und 10 °C und einem pH-Wert von 8 bis 10 um; danach werden 145 Teile 3-(β-Sulfatoethylsulfonyl)-anilin hinzugegeben, und die zweite Kondensationsreaktion erfolgt bei einer Temperatur zwischen 0 und 40 °C und einem pH-Wert zwischen 3 und 6. Nach Beendigung der Umsetzung wird die Lösung zu dem Ansatz mit der Phthalocyaninverbindung gegeben, und man führt die Umsetzung der aminogruppenhaltigen Phthalocyaninverbindung mit der Monochlor-triazin-Verbindung bei einem pH-Wert von 3 bis 7 und einer Temperatur von 40 bis 90 °C während etwa 10 Stunden durch.

Aus der klaren blaugrünen Lösung wird der erfindungsgemäße Phthalocyaninfarbstoff durch Eindampfen oder durch Aussalzen isoliert. Er entspricht, in Form der freien Säure geschrieben, der Formel (25) (Formel s. Formelblätter nach dem letzten Beispiel) und hat im sichtbaren Bereich ein Absorptionsmaximum

bei 672 nm. Er zeichnet sich durch sehr gute faserreaktive Farbstoffeigenschaften aus und färbt die in der Beschreibung genannten Materialien, wie insbesondere Cellulosefasermaterialien, nach den in der Technik für faserreaktive Farbstoffe üblichen Anwendungsverfahren in farbstarken, echten, grünen bis türkisblauen Tönen.

Beispiele 92 bis 133

In den nachfolgenden Tabellenbeispielen sind weitere erfindungsgemäße Phthalocyaninfarbstoffe entsprechend der allgemeinen Formel (B) (Formel s. Formelblätter nach dem letzten Beispiel) mit Hilfe von deren Formelresten beschrieben. Sie lassen sich in erfindungsgemäßer Weise, beispielsweise nach einem der obigen Ausführunsbeispiele, mittels ihrer aus dem jeweiligen Tabellenbeispiel in Verbindung mit der Formel (B) ersichtlichen Komponenten (so einem sulfonylgruppenhaltigen und gegebenenfalls sulfogruppenhaltigen Kupferphthalocyanin-mono- oder -dicarbonsäurechlorid, Cyanurchlorid oder einem in 6-Stellung substituierten 2,4-Dichlor-s-triazin, einer Aminoverbindung entsprechend der in der Beschreibung angegebenen allgemeinen Formel (2) und 1,2-Diamino-ethan) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton.

| Bsp. | Rest $R^A$ | W | A | (C+D) | Farbton |
|---|---|---|---|---|---|
| 92 | 2-(β-Sulfatoethylsulfonyl)-phenylamino | Chlor | 1,7 | 1,8 | grün (673) |
| 93 | 2-Methoxy-5-(β-sulfatoethylsulfonyl)-phenylamino | Chlor | 1,7 | 1,8 | grün (672) |
| 94 | 2-Methoxy-4-(β-sulfatoethylsulfonyl)-phenylamino | Chlor | 1,7 | 1,8 | grün (662) |
| 95 | N-Ethyl-4-(β-sulfatoethylsulfonyl)-phenylamino | Chlor | 1,7 | 1,8 | grün (662) |
| 96 | N-Ethyl-3-(β-sulfatoethylsulfonyl)-phenylamino | Chlor | 1,7 | 1,8 | grün (662) |
| 97 | 2-Sulfo-5-(β-sulfatoethylsulfonyl)-phenylamino | Chlor | 1,7 | 1,8 | grün (674) |
| 98 | 2-Carboxy-5-(β-sulfatoethylsulfonyl)-phenylamino | Chlor | 1,7 | 1,8 | grün (675) |
| 99 | 2-Hydroxy-5-(β-sulfatoethylsulfonyl)-phenylamino | Chlor | 1,7 | 1,8 | grün (673) |

| Bsp. | Rest $R^A$ | W | A | (C+D) | Farbton |
|---|---|---|---|---|---|
| 100 | 2-Hydroxy-4-(β-sulfatoethylsulfonyl)-phenylamino | Chlor | 1,7 | 1,8 | grün (673) |
| 101 | 3-(β-Sulfatoethylsulfonyl)-propylamino | Chlor | 1,7 | 1,8 | grün (671) |
| 102 | 3-(β-Chlorethylsulfonyl)-propylamino | Chlor | 1,7 | 1,8 | grün (671) |
| 103 | β-[4-(β'-Sulfatoethylsulfonyl)-phenyl]-ethylamino | Chlor | 1,7 | 1,8 | grün (672) |
| 104 | β-[3-Sulfo-4-(β'-sulfatoethylsulfonyl)-phenyl]-ethylamino | Chlor | 1,7 | 1,8 | grün (674) |
| 105 | Bis-[β-(β'-chlorethylsulfonyl)-ethyl]-amino | Chlor | 1,7 | 1,8 | grün (673) |
| 106 | 3,4-Di-(β-sulfatoethylsulfonyl)-phenylamino | Chlor | 1,7 | 1,8 | grün (674) |
| 107 | 2,5-Di-(β-sulfatoethylsulfonyl)-phenylamino | Chlor | 1,7 | 1,8 | grün (674) |
| 108 | β-(β'-Sulfatoethylsulfonyl)-ethylamino | Chlor | 1,7 | 1,8 | grün (670) |

| Bsp. | Rest $R^A$ | W | A | (C+D) | Farbton |
|---|---|---|---|---|---|
| 109 | ß-(ß'-Chlorethylsulfonyl)-ethylamino | Chlor | 1,7 | 1,8 | grün (670) |
| 110 | ß-[ß'(ß"-Sulfatoethylsulfonyl)-ethoxy]-ethylamino | Chlor | 1,7 | 1,8 | grün (670) |
| 111 | ß-[ß'(ß"-Chlorethylsulfonyl)-ethoxy]-ethylamino | Chlor | 1,7 | 1,8 | grün (670) |
| 112 | 4-(ß-Sulfatoethylsulfonyl)-phenylamino | Methoxy | 1,7 | 1,8 | grün (673) |
| 113 | 3-(ß-Sulfatoethylsulfonyl)-phenylamino | Methoxy | 1,7 | 1,8 | grün (673) |
| 114 | N-Ethyl-4-(ß-sulfatoethylsulfonyl)-phenylamino | Cyanamido | 1,7 | 1,8 | grün (672) |
| 115 | N-Ethyl-3-(ß-sulfatoethylsulfonyl)-phenylamino | Cyanamido | 1,7 | 1,8 | grün (672) |
| 116 | 2-Sulfo-5-(ß-sulfatoethylsulfonyl)-phenylamino | Cyanamido | 1,7 | 1,8 | Grün (675) |
| 117 | 3-(ß-Sulfatoethylsulfonyl)-propylamino | Cyanamido | 1,7 | 1,8 | grün (670) |

| Bsp. | Rest $R^A$ | W | A | (C+D) | Farbton |
|---|---|---|---|---|---|
| 118 | 3-(ß-Chlorethylsulfonyl)-propylamino | Cyanamido | 1,7 | 1,8 | grün (670) |
| 119 | ß-(ß'-Sulfatoethylsulfonyl)-ethylamino | Cyanamido | 1,7 | 1,8 | grün (671) |
| 120 | ß-(ß'-Chlorethylsulfonyl)-ethylamino | Cyanamido | 1,7 | 1,8 | grün (671) |
| 121 | ß-[ß'-(ß"-Sulfatoethylsulfonyl)-ethoxy]-ethylamino | Cyanamido | 1,7 | 1,8 | grün (671) |
| 122 | ß-[ß'-(ß"-Chlorethylsulfonyl)-ethoxy]-ethylamino | Cyanamido | 1,7 | 1,8 | grün (671) |
| 123 | 4-(ß-Sulfatoethylsulfonyl)-phenylamino | N-Ethyl-ß-sulfo-ethylamino | 1,7 | 1,8 | grün (674) |
| 124 | 3-(ß-Sulfafatoethylsulfonyl)-phenylamino | dito | 1,7 | 1,8 | grün (674) |
| 125 | N-Ethyl-4-(ß-sulfatoethylsulfonyl)-phenylamino | dito | 1,7 | 1,8 | grün (672) |
| 126 | N-Ethyl-3-(ß-sulfatoethylsulfonyl)-phenylamino | dito | 1,7 | 1,8 | grün (672) |

| Bsp. | Rest $R^A$ | W | A | (C+D) | Farbton |
|---|---|---|---|---|---|
| 127 | 2-Sulfo-4-(ß-sulfatoethylsulfonyl)-phenylamino | dito | 1,7 | 1,8 | grün (675) |
| 128 | 3-(ß-Sulfatoethylsulfonyl)-propylamino | dito | 1,7 | 1,8 | grün (672) |
| 129 | 3-(ß-Chlorethylsulfonyl)-propylamino | dito | 1,7 | 1,8 | grün (672) |
| 130 | ß-(ß'-Sulfatoethylsulfonyl)-ethylamino | dito | 1,7 | 1,8 | grün (672) |
| 131 | ß-(ß'-Chlorethylsulfonyl)-ethylamino | dito | 1,7 | 1,8 | grün (672) |
| 132 | ß-[ß'(ß''-Sulfatoethylsulfonyl)-ethoxy]-ethylamino | dito | 1,7 | 1,8 | grün (672) |
| 133 | ß-[ß'(ß''-Chlorethylsulfonyl)-ethoxy]-ethylamino | dito | 1,7 | 1,8 | grün (672) |

Beispiel 134

156 Teile Kupferphthalocyanin-tetracarbonsäurechlorid und 75 Teile 3-Acetylamino-anilin werden in 500 Teile Wasser eingerührt; die Umsetzung erfolgt bei einer Temperatur von 40 bis 70 ° C während etwa 10 Stunden unter Einhaltung eines pH-Wertes von 5 bis 7. Danach gibt man 357 Teile konzentrierte Schwefelsäure hinzu und rührt den Ansatz bei 80 bis 90 ° C während 3 bis 5 Stunden weiter. Der Ansatz wird abgekühlt, 95 Teile Cyanurchlorid werden hinzugegeben, und die weitere Umsetzung wird bei einer Temperatur von 0 bis 10 ° C und einem pH-Wert von 4 bis 6 durchgeführt. Nach anschließender Zugabe von 145 Teilen 4-($\beta$-Sulfatoethylsulfonyl)-anilin führt man die zweite Kondensationsreaktion bei einer Temperatur zwischen 0 und 40 ° C und einem pH-Wert von 3 bis 6 während etwa 4 Stunden durch.

Aus der klaren blaugrünen Lösung wird der erhaltene erfindungsgemäße Kupferphthalocyaninfarbstoff, dem, in Form der freien Säure geschrieben, die Formel (26) (Formel s. Formelblätter nach dem letzten Beispiel) gegeben werden kann, durch Eindampfen oder Aussalzen isoliert. Er besitzt im sichtbaren Bereich ein Absorptionsmaximum bei 671 nm und liefert nach den in der Technik für faserreaktive Farbstoffe üblichen Anwendungsverfahren farbstarke, echte grüne bis türkisblaue Färbungen und Drucke.

Beispiel 135

Zur Herstellung eines erfindungsgemäßen Kupferphthalocyaninfarbstoffes verfährt man gemäß der Verfahrensweise des Beispieles 134, setzt jedoch anstelle des 4-($\beta$-Sulfatoethylsulfonyl)-anilins das 3-($\beta$-Sulfatoethylsulfonyl)-anilin in gleicher Menge als eine der Ausgangsverbindungen ein.
Der so erhaltene, in dieser Aminokomponente zum Farbstoff des Beispieles 134 isomere erfindungsgemäße Kupferphthalocyaninfarbstoff besitzt im sichtbaren Bereich ein Absorptionsmaximum bei 671 nm und färbt nach den für faserreaktive Farbstoffe üblichen Färbe- und Druckverfahren die in der Beschreibung genannten Materialien, wie insbesondere Cellulosefasermaterialien, in grünen bis türkisblauen Tönen mit guten Echtheitseigenschaften.

Beispiel 136

Zur Herstellung eines erfindungsgemäßen Kupferphthalocyaninfarbstoffes setzt man zunächst gemäß den Angaben des Beispieles 134 Kupferphthalocyanin-tetracarbonsäurechlorid mit 3-Acetylamino-anilin in 1000 Teilen Wasser um und hydrolysiert anschließend, wie im Beispiel 134 angegeben, die Acetylaminogruppe zur Aminogruppe mittels Schwefelsäure.
In einem getrennten Ansatz setzt man 95 Teile Cyanurchlorid bei 0 bis 10°C und einem pH-Wert von 8 bis 10 mit 21 Teilen Cyanamid und anschließend mit 145 Teilen 4-($\beta$-Sulfatoethylsulfonyl)-anilin bei 0 bis 40°C und einem pH-Wert von 3 bis 6 um (vgl. Beispiel 91). Die beiden Reaktionsansätze werden vereinigt, und die Umsetzung der aminogruppenhaltigen Kupferphthalocyaninverbindung mit der Chlortriazinverbindung erfolgt bei einem pH-Wert von 3 bis 7 und einer Temperatur von 40 bis 90°C während etwa acht Stunden.

Aus der klaren, blaugrünen Syntheselösung wird der erfindungsgemäße Kupferphthalocyaninfarbstoff, der, in Form der freien Säure, der Formel (27) (Formel s. Formelblätter nach dem letzten Beispiel) entspricht, isoliert. Er zeigt im sichtbaren Bereich ein Absorptionsmaximum bei 671 nm, besitzt faserreaktive Eigenschaften und liefert auf den in der Beschreibung genannten Materialien, wie insbesondere Cellulosefasermaterialien, nach den in der Technik für faserreaktive Farbstoffe üblichen Anwendungsverfahren farbstarke, echte, grüne bis türkisblaue Färbungen und Drucke.

Beispiel 137

Zur Herstellung eines erfindungsgemäßen Kupferphthalocyaninfarbstoffes verfährt man gemäß der Verfahrensweise des Beispieles 136, setzt jedoch anstelle des 4-($\beta$-Sulfatoethylsulfonyl)-anilins das 3-($\beta$-Sulfatoethylsulfonyl)-anilin in gleicher Menge als eine der Ausgangsverbindungen ein.

Der so erhaltene, in dieser Aminokomponente zum Farbstoff des Beispieles 136 isomere erfindungsgemäße Kupferphthalocyaninfarbstoff besitzt im sichtbaren Bereich ein Absorptionsmaximum bei 671 nm und färbt nach den für faserreaktive Farbstoffe üblichen Färbe- und Druckverfahren die in der Beschreibung genannten Materialien, wie insbesondere Cellulosefasermaterialien, in grünen bis türkisblauen Tönen mit guten Echtheitseigenschaften.

Beispiele 138 bis 177

In den nachfolgenden Tabellenbeispielen sind weitere erfindungsgemäße Phthalocyaninfarbstoffe entsprechend der allgemeinen Formel (C) (Formel s. Formelblätter nach dem letzten Beispiel) mit Hilfe von deren Formelresten beschrieben. Sie lassen sich in erfindungsgemäßer Weise, beispielsweise nach einem der obigen Ausführunsbeispiele, mittels ihrer aus dem jeweiligen Tabellenbeispiel in Verbindung mit der Formel (C) ersichtlichen Komponenten (einem Kupferphthalocyanin-tetracarbonsäurechlorid, Cyanurchlorid oder einem in 6-Stellung substituierten 2,4-Dichlor-s-triazin, einer Aminoverbindung entsprechend der in der Beschreibung angegebenen allgemeinen Formel (2), Cyanamid und 1,3-Diamino-benzol) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton.

| Bsp. | Rest $R^A$ | W | A | D | Farbton |
|---|---|---|---|---|---|
| 138 | 2-(ß-Sulfatoethylsulfonyl)-phenylamino | Chlor | 1,0 | 2,5 | grün (672) |
| 139 | 2-Methoxy-5-(ß-sulfatoethyl-sulfonyl)-phenylamino | Chlor | 1,0 | 2,5 | grün (671) |
| 140 | 2-Methoxy-4-(ß-sulfatoethyl-sulfonyl)-phenylamino | Chlor | 1,0 | 2,5 | grün (671) |
| 141 | N-Ethyl-4-(ß-sulfatoethylsulfonyl)-phenylamino | Chlor | 1,0 | 2,5 | grün (671) |
| 142 | N-Ethyl-3-(ß-sulfatoethylsulfonyl)-phenylamino | Chlor | 1,0 | 2,5 | grün (671) |
| 143 | 2-Sulfo-5-(ß-sulfatoethylsulfonyl)-phenylamino | Chlor | 1,0 | 2,5 | grün (673) |
| 144 | 2-Carboxy-5-(ß-sulfatoethylsulfonyl)-phenylamino | Chlor | 1,0 | 2,5 | grün (674) |
| 145 | 2-Hydroxy-5-(ß-sulfatoethylsulfonyl)-phenylamino | Chlor | 1,0 | 2,5 | grün (672) |

| Bsp. | Rest $R^A$ | W | A | D | Farbton |
|---|---|---|---|---|---|
| 146 | 2-Hydroxy-4-(ß-sulfatoethylsulfonyl)-phenylamino | Chlor | 1,0 | 2,5 | grün (672) |
| 147 | 3-(ß-Sulfatoethylsulfonyl)-propylamino | Chlor | 1,0 | 2,5 | grün (671) |
| 148 | 3-(ß-Chlorethylsulfonyl)-propylamino | Chlor | 1,0 | 2,5 | grün (671) |
| 149 | ß-[4-(ß'-Sulfatoethylsulfonyl)-phenyl]-ethylamino | Chlor | 1,0 | 2,5 | grün (671) |
| 150 | ß-[3-Sulfo-4-(ß'-sulfatoethylsulfonyl)-phenyl]-ethylamino | Chlor | 1,0 | 2,5 | grün (673) |
| 151 | Bis-[ß-(ß'-chlorethylsulfonyl)-ethyl]-amino | Chlor | 1,0 | 2,5 | grün (671) |
| 152 | 3,4-Di-(ß-sulfatoethylsulfonyl)-phenylamino | Chlor | 1,0 | 2,5 | grün (672) |
| 153 | 2,5-Di-(ß-sulfatoethylsulfonyl)-phenylamino | Chlor | 1,0 | 2,5 | grün (673) |
| 154 | ß-(ß'-Sulfatoethylsulfonyl)-ethylamino | Chlor | 1,0 | 2,5 | grün (671) |

| Bsp. | Rest $R^A$ | W | A | D | Farbton |
|---|---|---|---|---|---|
| 155 | ß-(ß'-Chlorethylsulfonyl)-ethylamino | Chlor | 1,0 | 2,5 | grün (671) |
| 156 | 4-(ß-Sulfatoethylsulfonyl)-phenylamino | Methoxy | 1,0 | 2,5 | grün (672) |
| 157 | 3-(ß-Sulfatoethylsulfonyl)-phenylamino | Methoxy | 1,0 | 2,5 | grün (672) |
| 158 | N-Ethyl-4-(ß-sulfatoethylsulfonyl)-phenylamino | Cyanamido | 1,0 | 2,5 | grün (672) |
| 159 | N-Ethyl-3-(ß-sulfatoethylsulfonyl)-phenylamino | Cyanamido | 1,0 | 2,5 | grün (672) |
| 160 | 2-Sulfo-5-(ß-sulfatoethylsulfonyl)-phenylamino | Cyanamido | 1,0 | 2,5 | Grün (674) |
| 161 | 3-(ß-Sulfatoethylsulfonyl)-propylamino | Cyanamido | 1,0 | 2,5 | grün (670) |
| 162 | 3-(ß-Chlorethylsulfonyl)-propylamino | Cyanamido | 1,0 | 2,5 | grün (670) |
| 163 | ß-(ß'-Sulfatoethylsulfonyl)-ethylamino | Cyanamido | 1,0 | 2,5 | grün (671) |
| 164 | ß-(ß'-Chlorethylsulfonyl)-ethylamino | Cyanamido | 1,0 | 2,5 | grün (671) |

| Bsp. | Rest $R^A$ | W | A | D | Farbton |
|---|---|---|---|---|---|
| 165 | ß-[ß'-(ß"-Sulfatoethylsulfonyl)-ethoxy]-ethylamino | Cyanamido | 1,0 | 2,5 | grün (671) |
| 166 | ß-[ß'-(ß"-Chlorethylsulfonyl)-ethoxy]-ethylamino | Cyanamido | 1,0 | 2,5 | grün (671) |
| 167 | 4-(ß-Sulfatoethylsulfonyl)-phenylamino | N-Ethyl-ß-sulfo-ethylamino | 1,0 | 2,5 | grün (673) |
| 168 | 3-(ß-Sulfafatoethylsulfonyl)-phenylamino | dito | 1,0 | 2,5 | grün (673) |
| 169 | N-Ethyl-4-(ß-sulfatoethylsulfonyl)-phenylamino | dito | 1,0 | 2,5 | grün (672) |
| 170 | N-Ethyl-3-(ß-sulfatoethylsulfonyl)-phenylamino | dito | 1,0 | 2,5 | grün (672) |
| 171 | 2-Sulfo-4-(ß-sulfatoethylsulfonyl)-phenylamino | dito | 1,0 | 2,5 | grün (675) |
| 172 | 3-(ß-Sulfatoethylsulfonyl)-propylamino | dito | 1,0 | 2,5 | grün (671) |
| 173 | 3-(ß-Chlorethylsulfonyl)-propylamino | dito | 1,0 | 2,5 | grün (671) |

| Bsp. | Rest $R^A$ | W | A | D | Farbton |
|---|---|---|---|---|---|
| 174 | ß-(ß'-Sulfatoethylsulfonyl)-ethylamino | dito | 1,0 | 2,5 | grün (671) |
| 175 | ß-(ß'-Chlorethylsulfonyl)-ethylamino | dito | 1,0 | 2,5 | grün (672) |
| 176 | ß-[ß'(ß"-Sulfatoethylsulfonyl)-ethoxy]-ethylamino | dito | 1,0 | 2,5 | grün (671) |
| 177 | ß-[ß'(ß"-Chlorethylsulfonyl)-ethoxy]-ethylamino | dito | 1,0 | 2,5 | grün (671) |

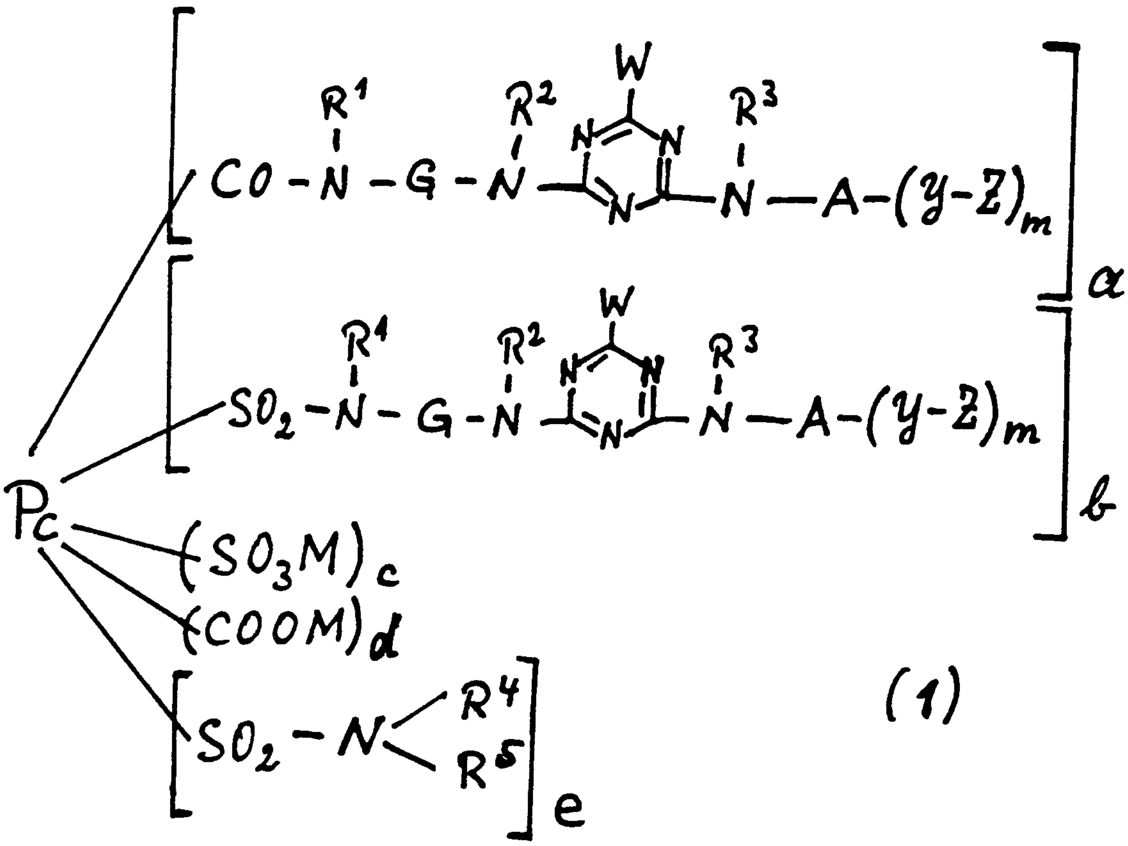

(1)

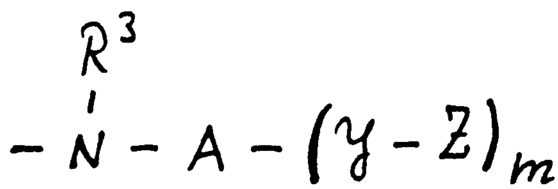

(2)

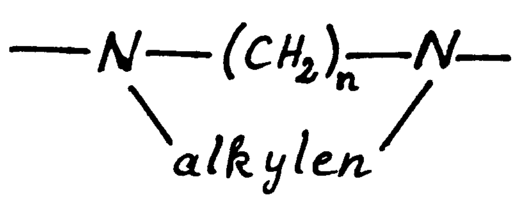

(3)

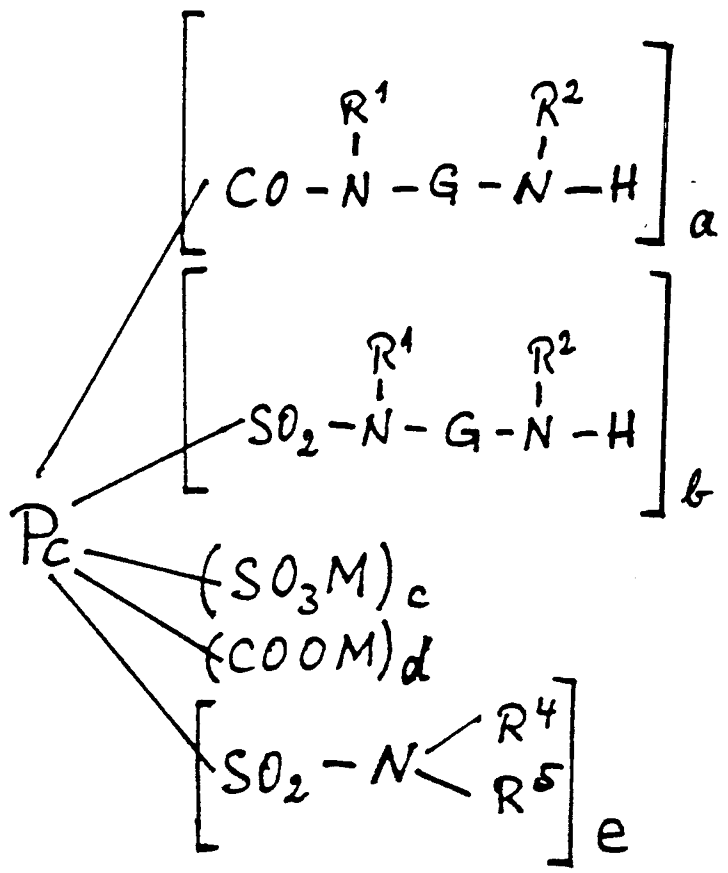

(4)

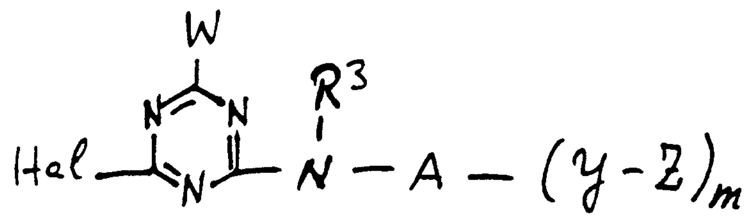

(5)

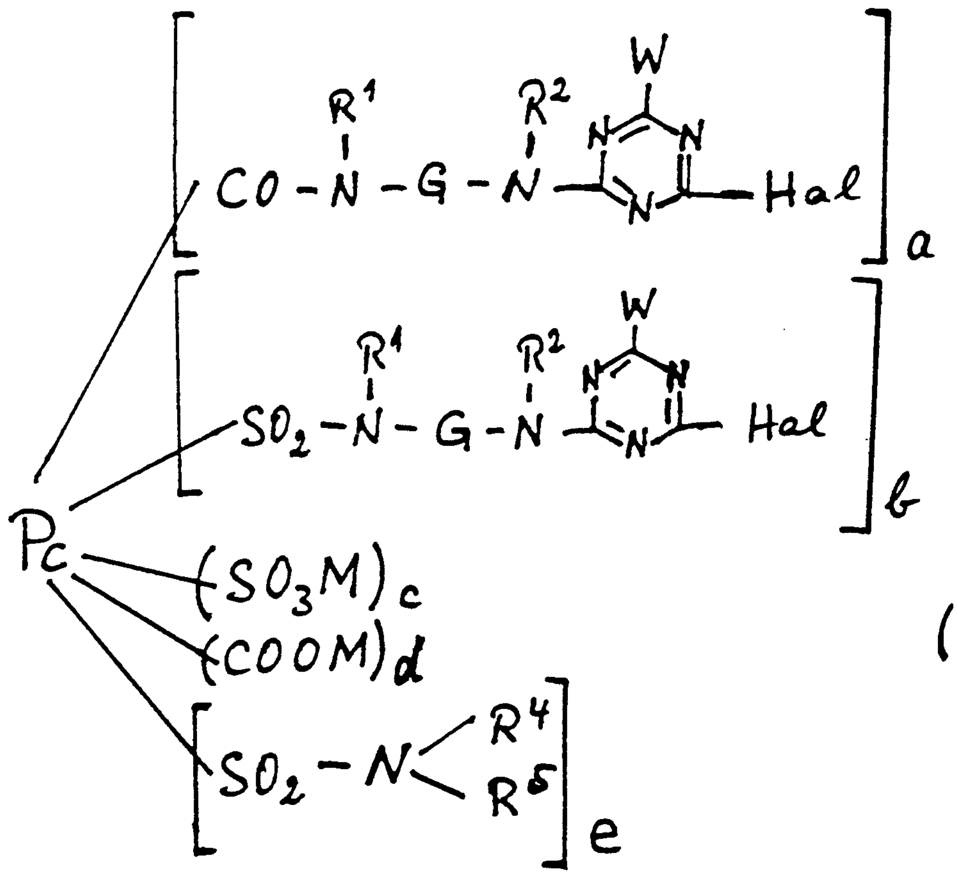

(6)

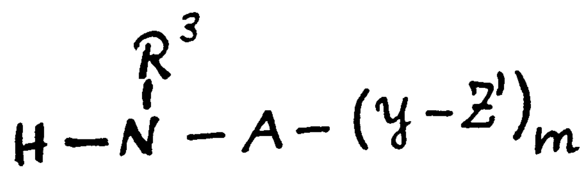

(7)

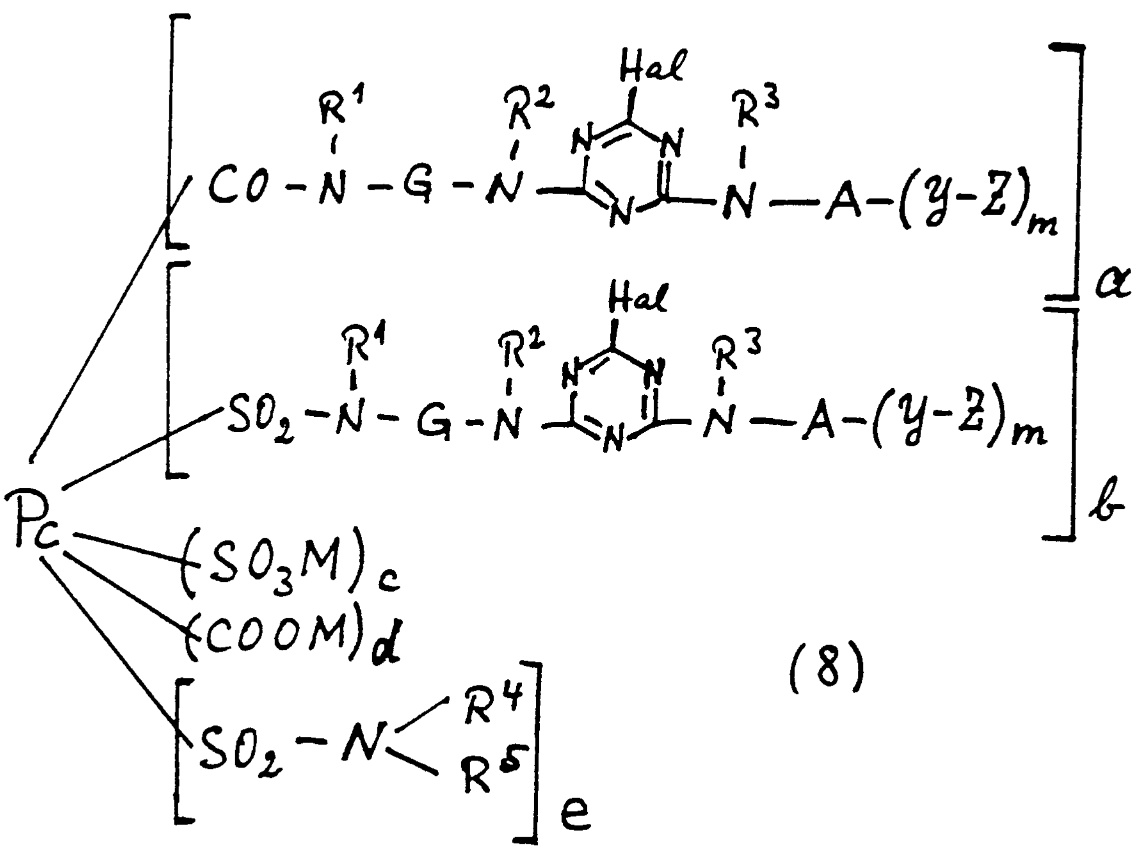

(8)

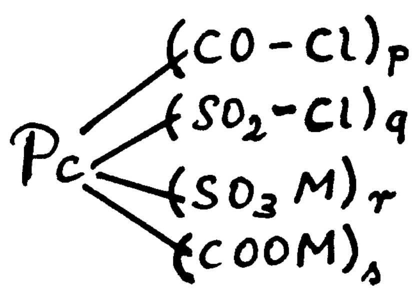

(9)

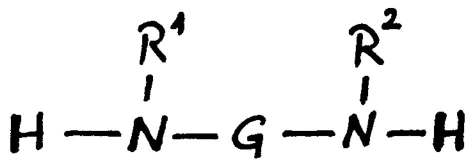

(10)

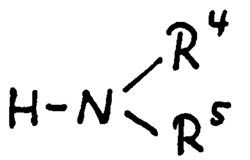

(11)

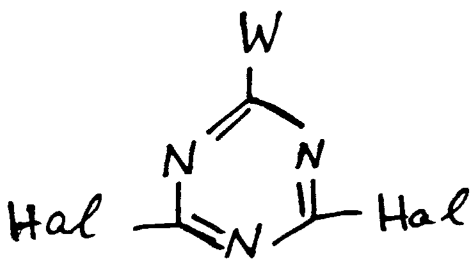

(12)

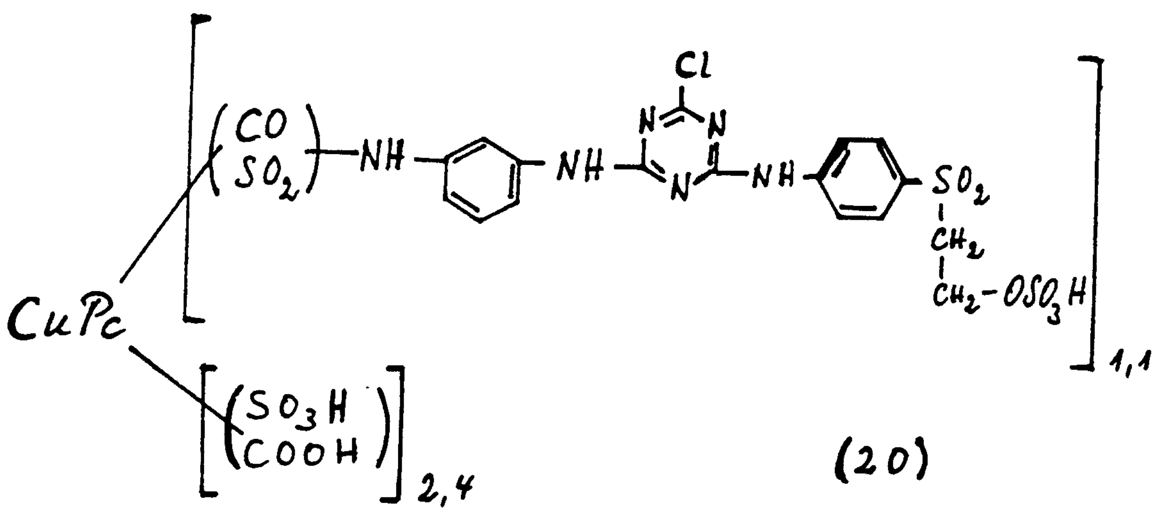

(20)

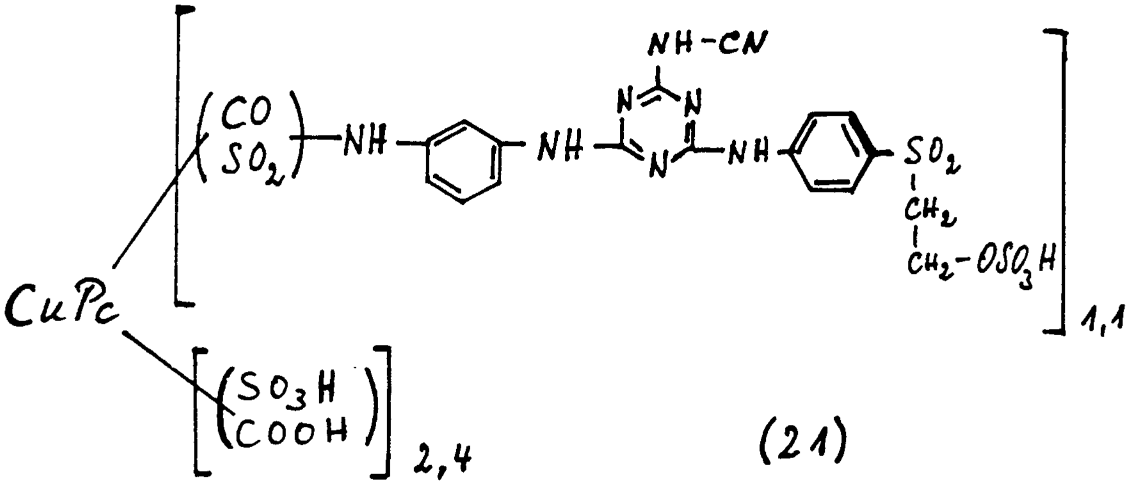

(21)

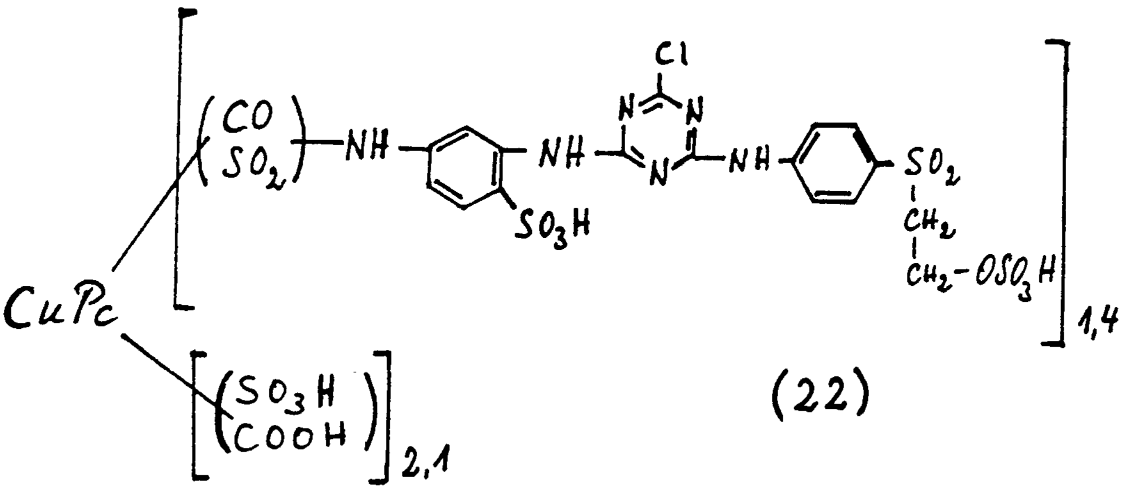

(22)

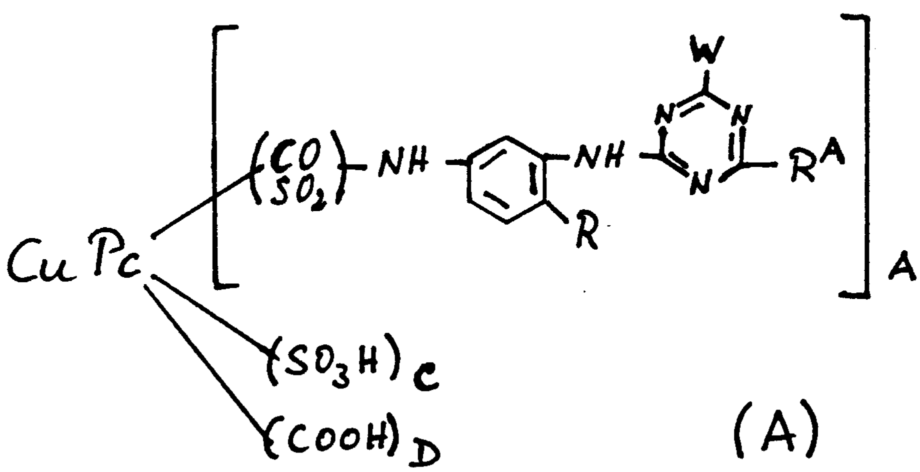

(A)

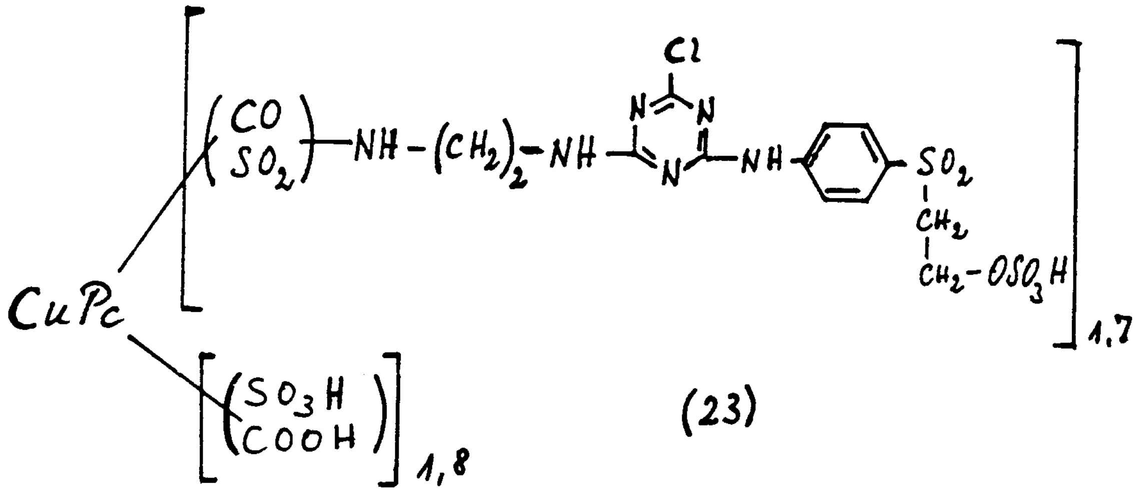

(23)

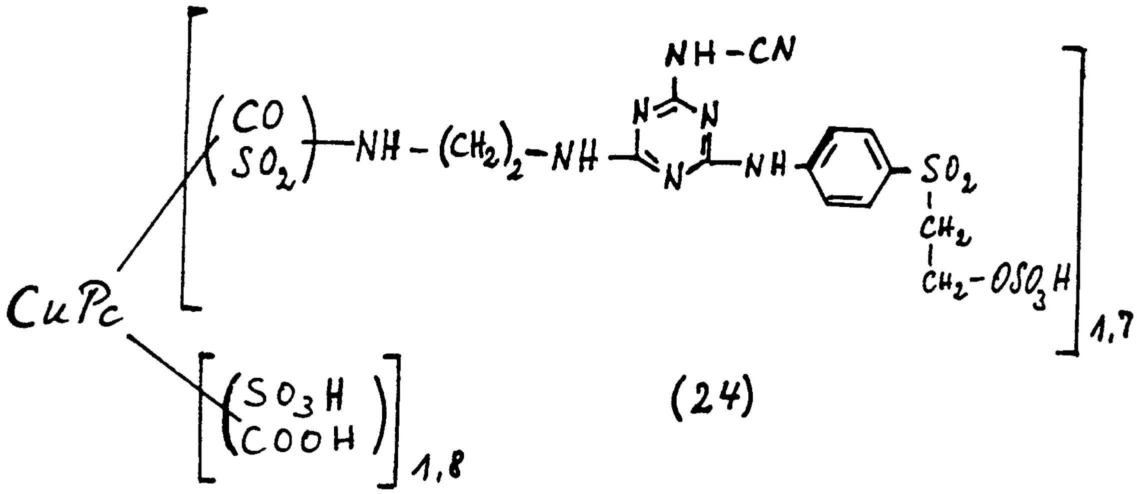

(24)

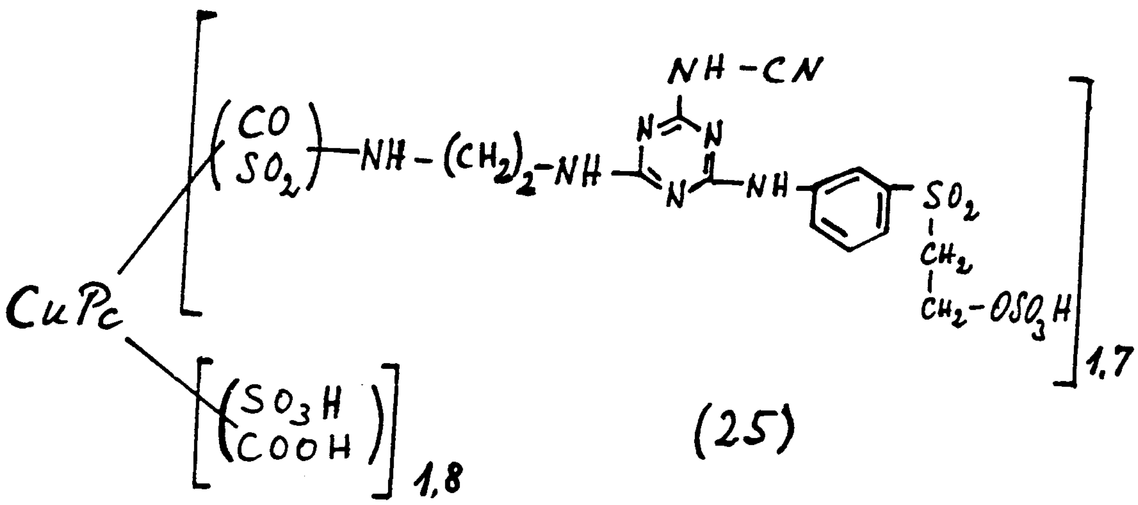

(25)

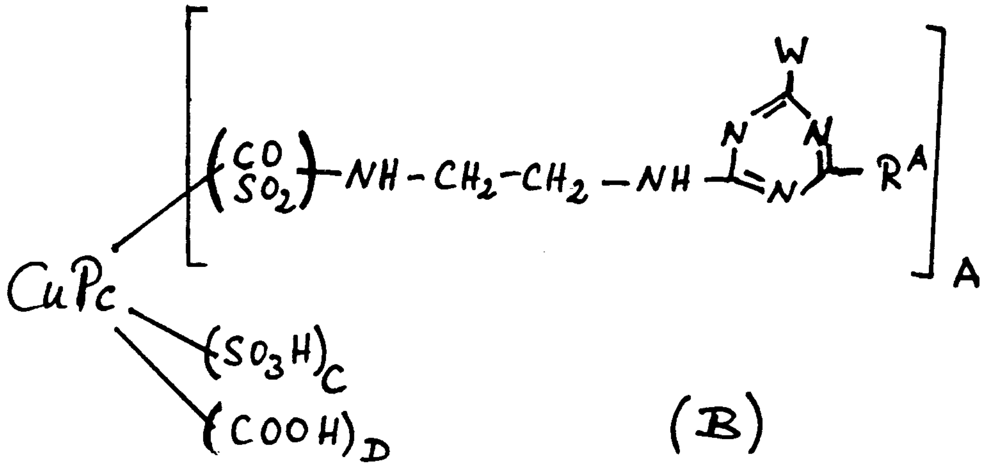

(B)

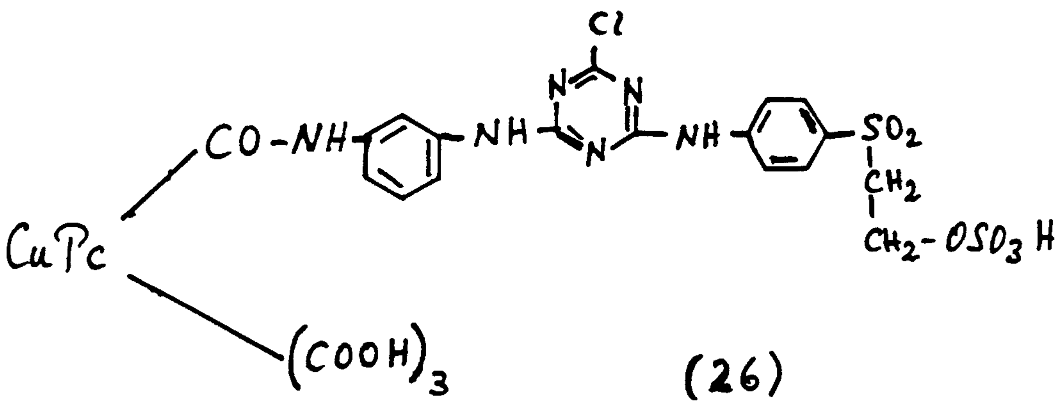

(26)

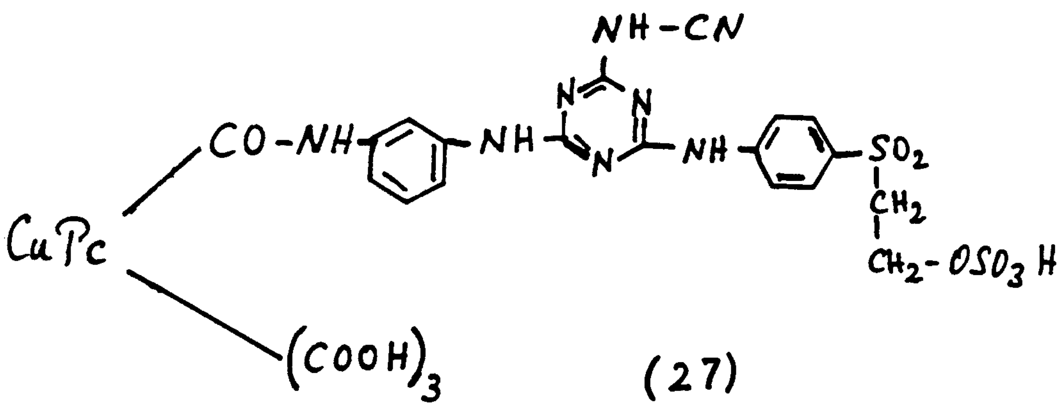

(27)

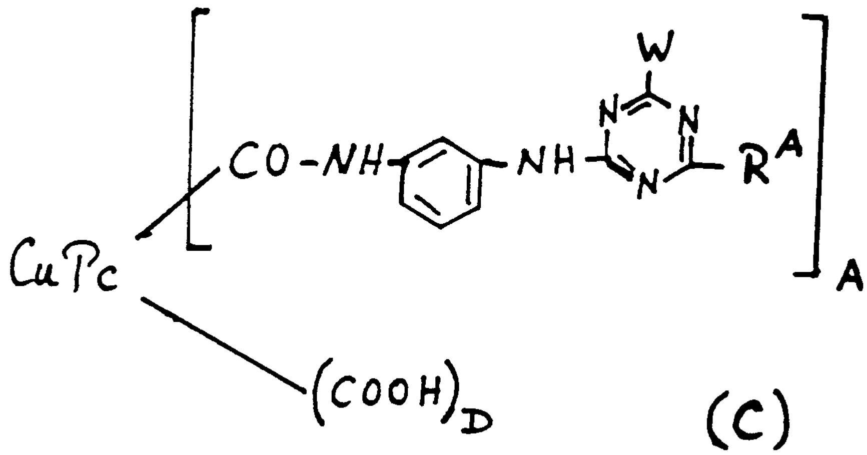

(C)

## Patentansprüche

1. Phthalocyaninfarbstoff der allgemeinen Formel (1)

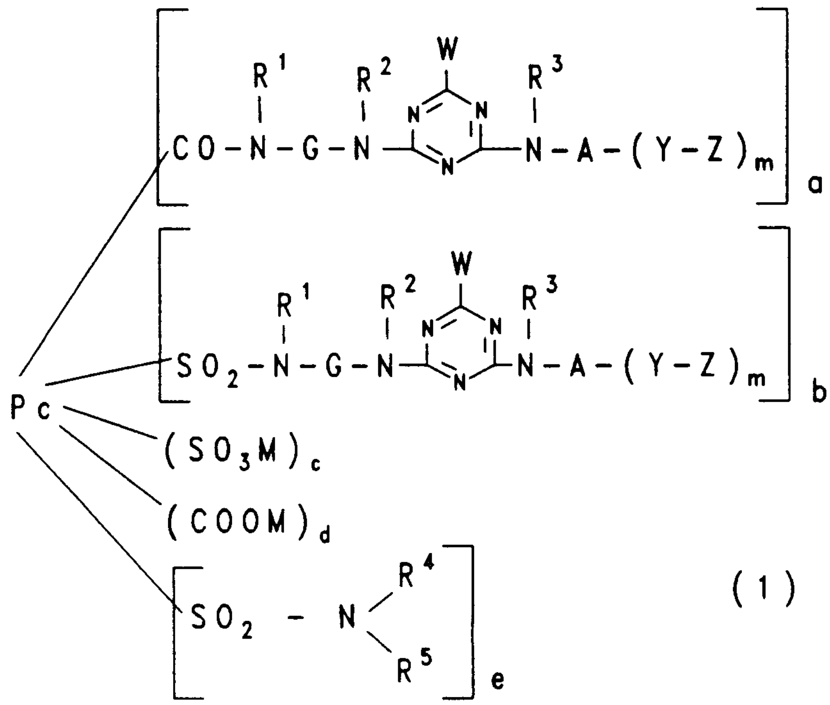

(1)

in welcher bedeuten:

| | |
|---|---|
| Pc | ist der Rest des metallfreien oder eines metallhaltigen Phthalocyanins, beispielsweise Kupfer-, Kobalt- oder Nickelphthalocyanins, in welchem die Carboxy-, Carbonamid-, Sulfonamid- und/oder Sulfogruppen in den 3- und/oder 4-Stellungen der carbocyclischen aromatischen Ringe des Phthalocyanins gebunden sind und der Phthalocyaninrest in den 3- und/oder 4-Stellungen der carbocyclischen aromatischen Ringe des Phthalocyanins noch durch andere Substituenten substituiert sein kann; |
| $R^1$ | ist Wasserstoff oder ein niederer aliphatischer Rest, der substituiert sein kann, bevorzugt Wasserstoff; |
| $R^2$ | ist Wasserstoff oder ein niederer aliphatischer Rest, der substituiert sein kann, bevorzugt Wasserstoff; |
| $R^3$ | ist Wasserstoff oder Alkyl von 1 bis 4 C-Atome, bevorzugt Wasserstoff; |

$R^4$ ist Wasserstoff oder niederes Alkyl, das substituiert sein kann, oder Cycloalkyl von 5 bis 8 C-Atomen;

$R^5$ ist Wasserstoff oder niederes Alkyl, das substituiert sein kann, oder Aryl, das substituiert sein kann, oder ist Cyano; oder

$R^4$ und $R^5$ bilden gemeinsam mit dem Stickstoffatom und einem Alkylenrest von 3 bis 8 C-Atomen oder mit einem weiteren Heteroatom und zwei niederen Alkylenresten den Rest eines 4- bis 8-gliedrigen heterocyclischen Rings, oder

$-NR^4R^5$ stellt einen Rest der Formel (2)

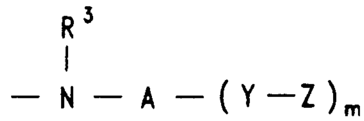 (2)

dar, in welcher $R^3$, A, Y, Z und m eine der obengenannten Bedeutungen haben;

G ist Alkylen von 1 bis 6 C-Atomen oder ist Phenylen, das durch 1 bis 4 Substituenten aus der Gruppe Alkyl von 1 bis 4 C-Atomen, Alkoxy von 1 bis 4 C-Atomen, Halogen, Sulfo, Carboxy und Nitro substituiert sein kann, oder
die Gruppierung $-N(R^1)-G-N(R^2)-$ bildet zusammen den bivalenten Rest eines gesättigten Heterocyclus;

W ist Halogen, Alkoxy von 1 bis 4 C-Atomen, Aryloxy, Sulfo, Phenylsulfonyl, Alkylsulfonyl von 1 bis 4 C-Atomen oder eine Aminogruppe der allgemeinen Formel $-NR^6R^7$, in welcher $R^6$ eine der oben für $R^4$ genannten Bedeutungen hat und $R^7$ eine der oben für $R^5$ genannten Bedeutungen besitzt, oder W ist ein Rest der obengenannten allgemeinen Formel (2), in welcher $R^3$, A, Y, Z und m eine der obengenannten Bedeutungen besitzen;

A ist ein aromatischer carbocyclischer oder aromatischer heterocyclischer Rest, bevorzugt ein gegebenenfalls substituierter Phenylen- oder Naphthylenrest, oder ist ein Alkylenrest von 1 bis 8 C-Atomen, bevorzugt 2 bis 6 C-Atomen, oder ein Alkylenrest von 2 bis 8 C-Atomen, der durch 1 oder 2 Heterogruppen unterbrochen sein ist, oder ist ein Rest der Formel -alk-phenylen-, in welchem alk ein Alkylen von 1 bis 4 C-Atomen und phenylen ein Phenylenrest ist, oder

A ist ein Rest der allgemeinen Formel (3)

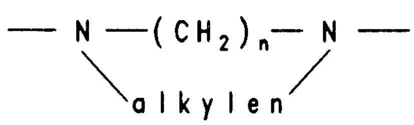 (3)

in welcher
n eine ganze Zahl von 2 bis 4 ist und
alkylen einen Alkylenrest von 1 bis 6 C-Atomen darstellt;

Y ist im Falle, daß A einen aromatischen Rest darstellt, eine direkte Bindung oder eine Gruppe der Formel -CO-NH-alkylen- mit alkylen der obigen Bedeutung, oder ist eine Gruppe der Formel

$-CH_2-$, $-CH_2-CH_2-$,

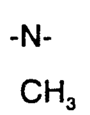 oder 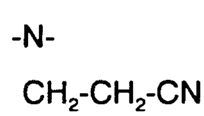 ,

oder

Y ist Alkylen von 2 bis 6 C-Atomen, wobei in diesem Falle -A-zwingend eine direkte Bindung und m gleich 2 ist;
Z ist Vinylsulfonyl oder ist Ethylsulfonyl, das in β-Stellung einen alkalisch eliminierbaren Substituenten enthält;
a ist eine ganze Zahl von Null bis 4, bevorzugt Null, 1 oder 2;
b ist eine ganze Zahl von Null bis 3;
c ist eine ganze Zahl von Null bis 3;
d ist eine ganze Zahl von Null bis 3;
e ist eine ganze Zahl von Null bis 2;
die Summe von (a + b + c + d + e) ist höchstens 4;
die Summe von (a + b) ist 1 bis 4, bevorzugt 1, 2 oder 3;
die Summe von (a + d) ist 1 bis 4;
die Summe von (c + d) ist Null bis 4;
m ist die Zahl 1 oder 2, bevorzugt 1;
M ist ein Wasserstoffatom oder ein Alkalimetall oder ein anderes salzbildendes Metall.

**2.** Phthalocyaninfarbstoff nach Anspruch 1, dadurch gekennzeichnet, daß W Cyanamido oder Chlor ist.

**3.** Phthalocyaninfarbstoff nach Anspruch 1 oder 2, dadurch gekennzeichnet, daß Y eine direkte Bindung ist.

**4.** Phthalocyaninfarbstoff nach einem oder mehreren der Ansprüche 1 bis 3, dadurch gekennzeichnet, daß A meta- oder para-Phenylen ist, das durch 1 oder 2 Substituenten aus der Gruppe Methyl, Ethyl, Methoxy, Ethoxy, Chlor, Carboxy und Sulfo substituiert sein kann.

**5.** Phthalocyaninfarbstoff nach mindestens einem der Ansprüche 1 bis 4, dadurch gekennzeichnet, daß b, c und e jeweils die Zahl Null bedeuten.

**6.** Phthalocyaninfarbstoff nach mindestens einem der Ansprüche 1 bis 5, dadurch gekennzeichnet, daß A den meta- oder para-Phenylenrest bedeutet.

**7.** Phthalocyaninfarbstoff nach mindestens einem der Ansprüche 1 bis 6, dadurch gekennzeichnet, daß Z die β-Sulfatoethylsulfonyl-Gruppe bedeutet.

**8.** Phthalocyaninfarbstoff nach Anspruch 1, dadurch gekennzeichnet, daß e die Zahl Null bedeutet.

**9.** Phthalocyaninfarbstoff nach Anspruch 1, dadurch gekennzeichnet, daß $R^4$ und $R^5$ beide für Wasserstoff stehen.

**10.** Verfahren zur Herstellung einer Phthalocyaninverbindung der allgemeinen Formel (1) von Anspruch 1, dadurch gekennzeichnet, daß man eine Verbindung der allgemeinen Formel (4)

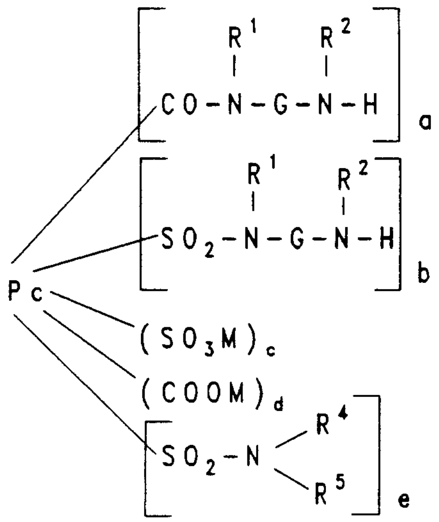

(4)

in welcher die einzelnen Formelreste die für Formel (1) angegebenen Bedeutungen haben, mit einer Halogen-triazin-Verbindung der allgemeinen Formel (5)

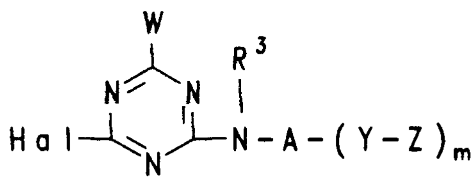

(5)

in welcher Hal für Halogen steht und W, $R^3$, A, Y, Z und m eine der in Anspruch 1 genannten Bedeutungen haben, umsetzt,
oder daß man eine Verbindung der allgemeinen Formel (6)

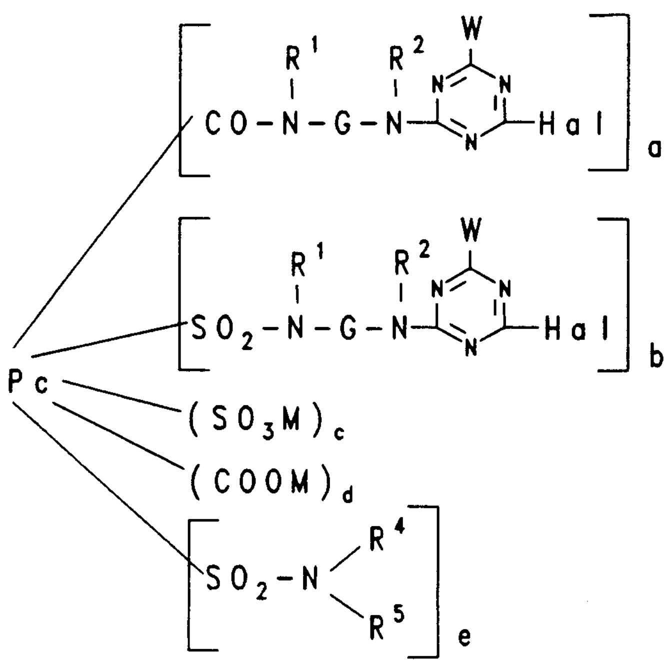

(6)

in welcher die Formelreste die für Formel (1) angegebenen Bedeutungen haben, mit einer Aminoverbindung der allgemeinen Formel (7)

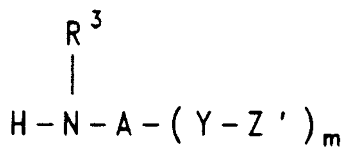

(7)

in welcher $R^3$, A, Y und m eine der in Anspruch 1 genannten Bedeutungen haben und Z' eine der für Z genannten Bedeutungen besitzt oder die β-Hydroxyethylsulfonyl-Gruppe ist, umsetzt, wobei man im Falle, daß Z' für die β-Hydroxyethylsulfonyl-Gruppe steht, die erhaltene β-hydroxyethylsulfonylgruppenhaltige Phthalocyaninverbindung in einen Phthalocyaninfarbstoff der Formel (1) mit einem Rest Z analog einer an und für sich bekannten Verfahrensweise überführt,
oder daß man zur Herstellung eines Phthalocyaninfarbstoffes der Formel (1), in welcher W eine der in Anspruch 1 für W genannten Aminogruppen bedeutet, eine Verbindung der allgemeinen Formel (8)

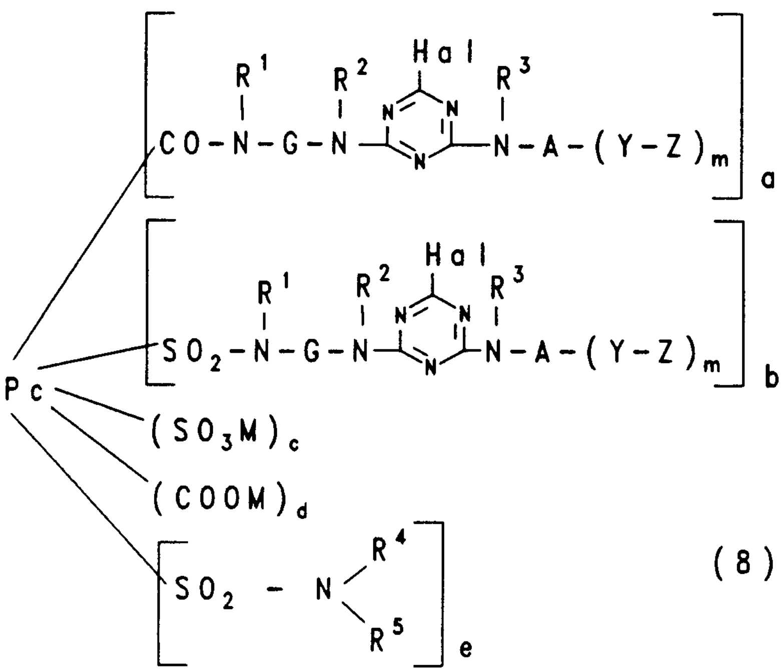

(8)

in welcher die einzelnen Formelreste die für Formel (1) angegebenen Bedeutungen haben und Hal für Chlor oder Fluor steht, mit einem Amin der allgemeinen Formel $HNR^6R^7$ mit $R^6$ und $R^7$ der in Anspruch 1 genannten Bedeutung oder einem Amin der allgemeinen Formel (7) umsetzt.

**11.** Verwendung eines Phthalocyaninfarbstoffes von mindestens einem der Ansprüche 1 bis 9 oder eines nach Anspruch 10 hergestellten Phthalocyaninfarbstoffes zum Färben und Bedrucken von hydroxy- und/oder carbonamidgruppenhaltigem Material, insbesondere Fasermaterial.

**12.** Verfahren zum Färben und Bedrucken von hydroxy- und/oder carbonamidgruppenhaltigem Material, vorzugsweise Fasermaterial, bei welchem man einen Farbstoff auf das Material aufbringt und den Farbstoff auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß der Farbstoff ein Phthalocyaninfarbstoff von mindestens einem der Ansprüche 1 bis 9 oder ein nach Anspruch 10 hergestellter Phthalocyaninfarbstoff ist.

**Patentansprüche für folgende Vertragsstaaten : ES, PT**

**1.** Verfahren zur Herstellung eines Phthalocyaninfarbstoffes der allgemeinen Formel (1)

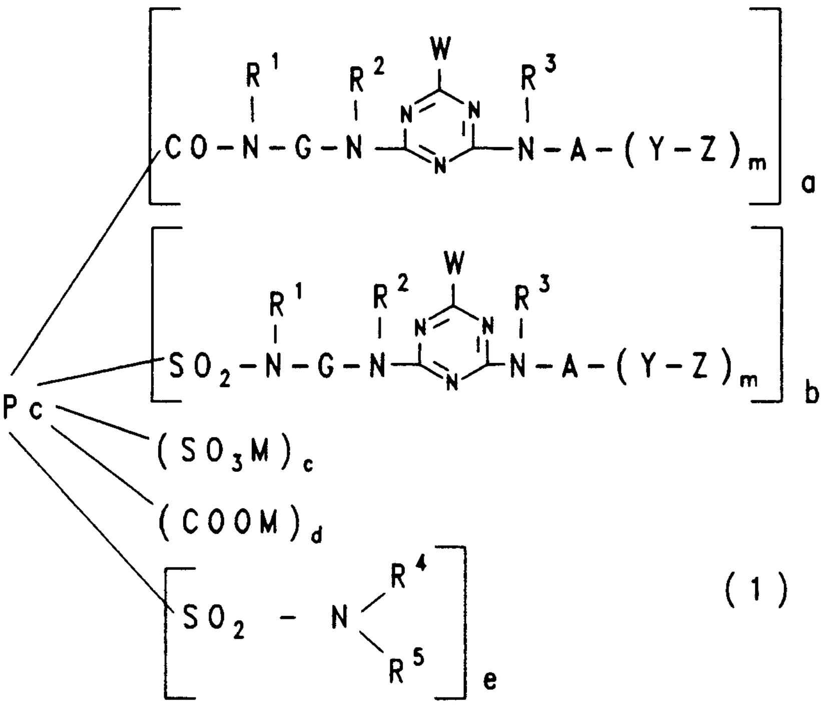

(1)

in welcher bedeuten:

Pc ist der Rest des metallfreien oder eines metallhaltigen Phthalocyanins, beispielsweise Kupfer-, Kobalt- oder Nickelphthalocyanins, in welchem die Carboxy-, Carbonamid-, Sulfonamid- und/oder Sulfogruppen in den 3- und/oder 4-Stellungen der carbocyclischen aromatischen Ringe des Phthalocyanins gebunden sind und der Phthalocyaninrest in den 3- und/oder 4-Stellungen der carbocyclischen aromatischen Ringe des Phthalocyanins noch durch andere Substituenten substituiert sein kann;

$R^1$ ist Wasserstoff oder ein niederer aliphatischer Rest, der substituiert sein kann, bevorzugt Wasserstoff;

$R^2$ ist Wasserstoff oder ein niederer aliphatischer Rest, der substituiert sein kann, bevorzugt Wasserstoff;

$R^3$ ist Wasserstoff oder Alkyl von 1 bis 4 C-Atome, bevorzugt Wasserstoff;

$R^4$ ist Wasserstoff oder niederes Alkyl, das substituiert sein kann, oder Cycloalkyl von 5 bis 8 C-Atomen;

$R^5$ ist Wasserstoff oder niederes Alkyl, das substituiert sein kann, oder Aryl, das substituiert sein kann, oder ist Cyano; oder

$R^4$ und $R^5$ bilden gemeinsam mit dem Stickstoffatom und einem Alkylenrest von 3 bis 8 C-Atomen oder mit einem weiteren Heteroatom und zwei niederen Alkylenresten den Rest eines 4- bis 8-gliedrigen heterocyclischen Rings, oder

$-NR^4R^5$ stellt einen Rest der Formel (2)

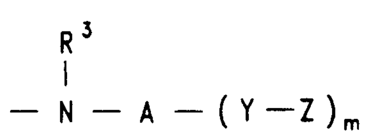

(2)

dar, in welcher $R^3$, A, Y, Z und m eine der obengenannten Bedeutungen haben;

G ist Alkylen von 1 bis 6 C-Atomen oder ist Phenylen, das durch 1 bis 4 Substituenten aus der Gruppe Alkyl von 1 bis 4 C-Atomen, Alkoxy von 1 bis 4 C-Atomen, Halogen, Sulfo, Carboxy und Nitro substituiert sein kann, oder

die Gruppierung $-N(R^1)-G-N(R^2)-$ bildet zusammen den bivalenten Rest eines gesättigten Heterocyclus;

W ist Halogen, Alkoxy von 1 bis 4 C-Atomen, Aryloxy, Sulfo, Phenylsulfonyl, Alkylsulfonyl von 1 bis 4 C-Atomen oder eine Aminogruppe der allgemeinen Formel $-NR^6R^7$, in welcher $R^6$ eine der oben für $R^4$ genannten Bedeutungen hat und $R^7$ eine der oben für $R^5$ genannten Bedeutungen besitzt, oder W ist ein Rest der obengenannten allgemeinen Formel (2), in welcher $R^3$, A, Y, Z und m eine der obengenannten Bedeutungen besitzen;

A ist ein aromatischer carbocyclischer oder aromatischer heterocyclischer Rest, bevorzugt ein gegebenenfalls substituierter Phenylen- oder Naphthylenrest, oder ist ein Alkylenrest von 1 bis 8 C-Atomen, bevorzugt 2 bis 6 C-Atomen, oder ein Alkylenrest von 2 bis 8 C-Atomen, der durch 1 oder 2 Heterogruppen unterbrochen sein ist, oder ist ein Rest der Formel -alk-phenylen- , in welchem alk ein Alkylen von 1 bis 4 C-Atomen und phenylen ein Phenylenrest ist, oder

A ist ein Rest der allgemeinen Formel (3)

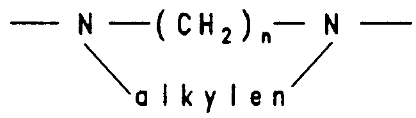

(3)

in welcher
n eine ganze Zahl von 2 bis 4 ist und
alkylen einen Alkylenrest von 1 bis 6 C-Atomen darstellt;

Y ist im Falle, daß A einen aromatischen Rest darstellt, eine direkte Bindung oder eine Gruppe der Formel -CO-NH-alkylen- mit alkylen der obigen Bedeutung, oder ist eine Gruppe der Formel

$-CH_2-$, $-CH_2-CH_2-$,

N- oder -N- ,
$CH_3$ $CH_2-CH_2-CN$

oder

Y ist Alkylen von 2 bis 6 C-Atomen, wobei in diesem Falle -A-zwingend eine direkte Bindung und m gleich 2 ist;

Z ist Vinylsulfonyl oder ist Ethylsulfonyl, das in $\beta$-Stellung einen alkalisch eliminierbaren Substituenten enthält;

a ist eine ganze Zahl von Null bis 4, bevorzugt Null, 1 oder 2;

b ist eine ganze Zahl von Null bis 3;

c ist eine ganze Zahl von Null bis 3;

d ist eine ganze Zahl von Null bis 3;

e ist eine ganze Zahl von Null bis 2;

die Summe von (a + b + c + d + e) ist höchstens 4;
die Summe von (a + b) ist 1 bis 4, bevorzugt 1, 2 oder 3;
die Summe von (a + d) ist 1 bis 4;
die Summe von (c + d) ist Null bis 4;

m ist die Zahl 1 oder 2, bevorzugt 1;

M ist ein Wasserstoffatom oder ein Alkalimetall oder ein anderes salzbildendes Metall,

dadurch gekennzeichnet, daß man eine Verbindung der allgemeinen Formel (4)

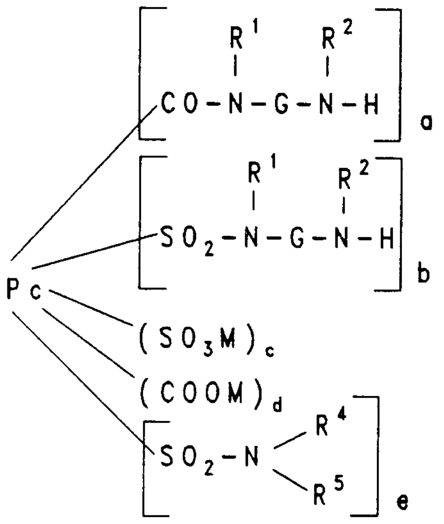

(4)

in welcher die einzelnen Formelreste die für Formel (1) angegebenen Bedeutungen haben, mit einer Halogen-triazin-Verbindung der allgemeinen Formel (5)

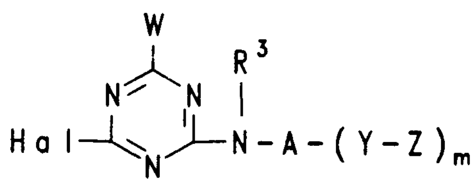

(5)

in welcher Hal für Halogen steht und W, $R^3$, A, Y, Z und m eine der oben genannten Bedeutungen haben, umsetzt,
oder daß man eine Verbindung der allgemeinen Formel (6)

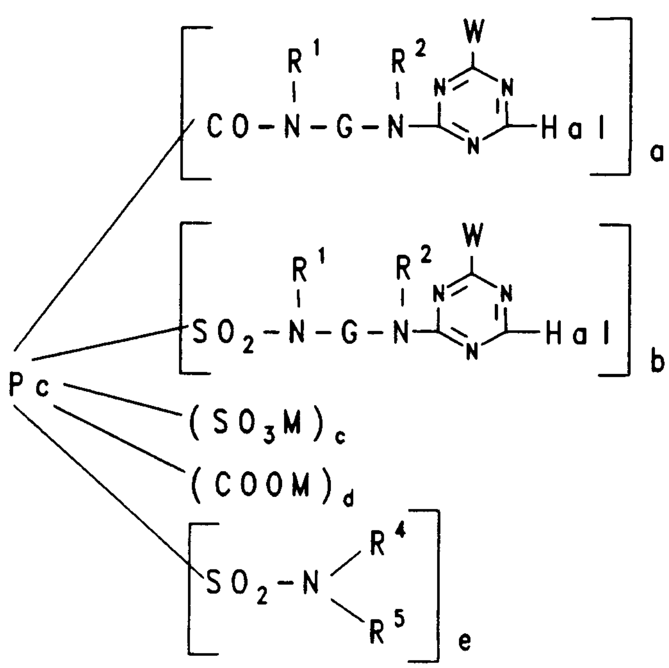

(6)

in welcher die Formelreste die für Formel (1) angegebenen Bedeutungen haben, mit einer Aminoverbindung der allgemeinen Formel (7)

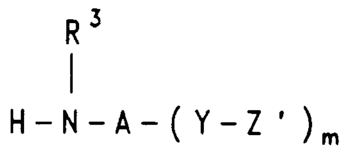

(7)

in welcher $R^3$, A, Y und m eine der oben genannten Bedeutungen haben und Z' eine der für Z genannten Bedeutungen besitzt oder die β-Hydroxyethylsulfonyl-Gruppe ist, umsetzt, wobei man im Falle, daß Z' für die β-Hydroxyethylsulfonyl-Gruppe steht, die erhaltene β-hydroxyethylsulfonylgruppenhaltige Phthalocyaninverbindung in einen Phthalocyaninfarbstoff der Formel (1) mit einem Rest Z überführt, oder daß man zur Herstellung eines Phthalocyaninfarbstoffes der Formel (1), in welcher W eine der oben für W genannten Aminogruppen bedeutet, eine Verbindung der allgemeinen Formel (8)

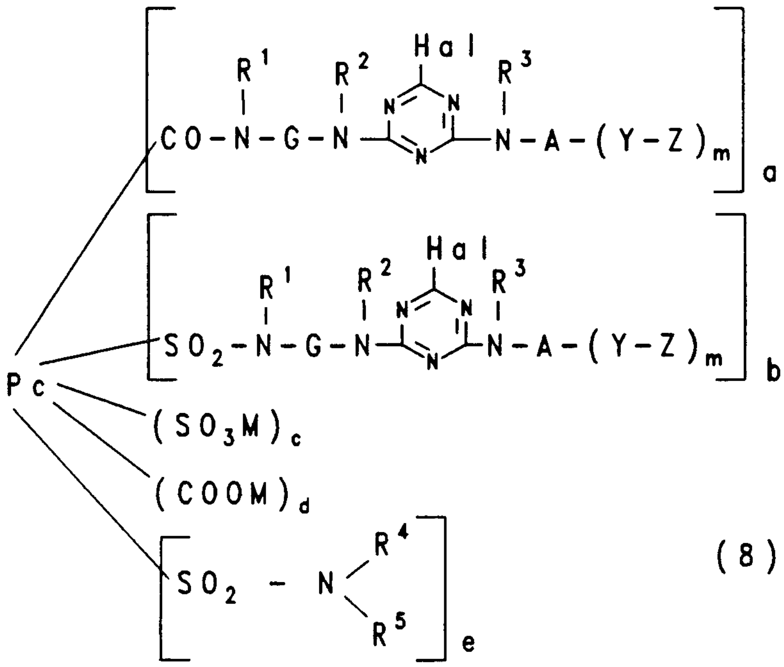

(8)

in welcher die einzelnen Formelreste die für Formel (1) angegebenen Bedeutungen haben und Hal für Chlor oder Fluor steht, mit einem Amin der allgemeinen Formel $HNR^6R^7$ mit $R^6$ und $R^7$ der oben genannten Bedeutung oder einem Amin der allgemeinen Formel (7) umsetzt.

2. Verfahren nach Anspruch 1, dadurch gekennzeichnet, daß W Cyanamido oder Chlor ist.

3. Verfahren nach Anspruch 1 oder 2, dadurch gekennzeichnet, daß Y eine direkte Bindung ist.

4. Verfahren nach einem oder mehreren der Ansprüche 1 bis 3, dadurch gekennzeichnet, daß A meta- oder para-Phenylen ist, das durch 1 oder 2 Substituenten aus der Gruppe Methyl, Ethyl, Methoxy, Ethoxy, Chlor, Carboxy und Sulfo substituiert sein kann.

5. Verfahren nach mindestens einem der Ansprüche 1 bis 4, dadurch gekennzeichnet, daß b, c und e jeweils die Zahl Null bedeuten.

6. Verfahren nach mindestens einem der Ansprüche 1 bis 5, dadurch gekennzeichnet, daß A den meta- oder para-Phenylenrest bedeutet.

**7.** Verfahren nach mindestens einem der Ansprüche 1 bis 6, dadurch gekennzeichnet, daß Z die *β*-Sulfatoethylsulfonyl-Gruppe bedeutet.

**8.** Verfahren nach Anspruch 1, dadurch gekennzeichnet, daß e die Zahl Null bedeutet.

**9.** Verfahren nach Anspruch 1, dadurch gekennzeichnet, daß $R^4$ und $R^5$ beide für Wasserstoff stehen.

**10.** Verfahren zum Färben und Bedrucken von hydroxy- und/oder carbonamidgruppenhaltigem Material, vorzugsweise Fasermaterial, bei welchem man einen Farbstoff auf das Material aufbringt und den Farbstoff auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß der Farbstoff ein Phthalocyaninfarbstoff von mindestens einem der Ansprüche 1 bis 9 ist.